# EUROPEAN PATENT APPLICATION

(11) **EP 4 575 748 A1**
(43) Date of publication of application: **25.06.2025**
(21) Application number: 23854465.4
(22) Date of filing: 16.08.2023
(51) Int. Cl.: G06F 3/14, G06F 3/01

(54) **HUMAN-COMPUTER INTERACTION METHOD, APPARATUS, DEVICE AND MEDIUM, VIRTUAL REALITY SPACE-BASED DISPLAY PROCESSING METHOD, APPARATUS, DEVICE AND MEDIUM, VIRTUAL REALITY SPACE-BASED MODEL DISPLAY METHOD, APPARATUS, DEVICE AND MEDIUM**

(30) Priority: 18.08.2022 CN 202210993897; 18.08.2022 CN 202210995392; 15.09.2022 CN 202211124457
(71) Applicant: Beijing Zitiao Network Technology Co., Ltd., Beijing 100190 (CN)
(72) Inventor: MENG, Fanchao, Beijing 100028 (CN); JI, Liyue, Beijing 100028 (CN); LI, Xiaolin, Beijing 100028 (CN); LUAN, Liangyong, Beijing 100028 (CN); CHANG, Ruixi, Beijing 100028 (CN); ZHU, Jian, Beijing 100028 (CN); WU, Yang, Beijing 100028 (CN); ZHAO, Yan, Beijing 100028 (CN)
(74) Representative: Dentons UK and Middle East LLP
(86) International application number: PCT/CN2023/113360
(87) International publication number: WO 2024/037565

(57) **Abstract**

A virtual reality space-based display processing method, apparatus, device and medium. The method comprises: in response to an operation of a user entering a virtual reality space, presenting virtual reality video information in a virtual screen in the virtual reality space; and respectively displaying a plurality of layers in a plurality of spatial position areas in the virtual reality space, wherein all the plurality of spatial position areas are at different display distances from the current viewing position of the user and are located in front of the virtual screen. A virtual reality space-based model display method, apparatus, device and medium. The method comprises: in response to a gift display instruction, generating a target gift model corresponding to the gift display instruction; determining, from a plurality of layers corresponding to a virtual reality video being currently played back, a target display layer corresponding to the target gift model, wherein spatial position areas corresponding to all the plurality of layers are at different display distances from the current viewing position of a user; and displaying the target gift model on a target spatial position area corresponding to the target display layer. A human-computer interaction method, apparatus, device and storage medium. The method comprises: in response to a trigger operation on a gift entrance in a virtual space, presenting, in the virtual space, a close gift panel corresponding to the gift entrance; and in response to a giving operation of a hand model in the virtual space on any virtual gift in the close gift panel, presenting a giving effect of the virtual gift in the virtual space.

## Description

### CROSS-REFERENCE TO RELATED APPLICATION(S)

The present disclosure is based on and claims priority to Chinese Patent Application No. 202210993897.7, filed on August 18, 2022, Chinese Patent Application No. 202210995392.4, filed on August 18, 2022, and Chinese Patent Application No. 202211124457.4, filed on September 15, 2022, which are incorporated herein by reference in their entireties.

### TECHNICAL FIELD

The present disclosure relates to the fields of virtual reality technology, communication technology, and extended reality (XR) technology, and in particular, to a display processing method and apparatus based on a virtual reality space, a device and a medium, a model display method and apparatus based on a virtual reality space, a device and a medium, and a human-machine interaction method and apparatus, a device, and a storage medium.

### BACKGROUND

Virtual reality (VR) technology, also known as a virtual environment, a spiritual environment, or an artificial environment, refers to a technology of generating a virtual world that can directly apply visual, auditory, and tactile feelings to a participant and allows the participant to perform interactively observation and operation by using a computer.

In the related art, a live video or the like may be displayed based on the virtual reality technology, and how to fully use depth information in a virtual reality space to improve an interactive experience of a user during a process of displaying the video is a mainstream requirement.

In the related art, when a live video is displayed in a real world, a user may send a gift by clicking a gift control, and therefore how to implement a gift sending interaction in a virtual reality space is important for improving a sense of reality of watching a video in a virtual reality world.

At present, extended reality (XR) technologies are more and more widely applied, comprising virtual reality (VR), augmented reality (AR), mixed reality (MR), and the like. In a virtual live streaming scenario, an XR technology enables a user to watch various virtual live streaming pictures in an immersive manner. For example, the user may experience a real live streaming interactive scenario by wearing a head-mounted display (HMD).

Generally, an audience may click likes, comment, or send virtual gifts to a favorite streamer, to enhance user interaction in the virtual live streaming scenario.

### SUMMARY

Embodiments of the present disclosure provide a display processing method based on a virtual reality space, the method comprising the following steps: presenting virtual reality video information in a virtual screen in a virtual reality space in response to an operation of a user entering the virtual reality space; and separately displaying a plurality of image layers in a plurality of spatial position areas in the virtual reality space, wherein each spatial position area of the spatial position areas is located in front of the virtual screen and has a different display distance from a current viewing position of the user. Embodiments of the present disclosure further provide a display processing apparatus based on a virtual reality space. The apparatus comprises: a display processing module, configured to display virtual reality video information in a virtual screen in a virtual reality space in response to an operation of a user entering the virtual reality space; and separately display a plurality of image layers in a plurality of spatial position areas in the virtual reality space, wherein each spatial position area of the plurality of spatial position areas is located in front of the virtual screen and has a different display distance from a current viewing position of the user.

Embodiments of the present disclosure further provide an electronic device. The electronic device comprises: a processor; and a memory configured to store instructions executable by the processor, where the processor is configured to read the executable instructions from the memory, and execute the instructions to implement the display processing method based on a virtual reality space provided in embodiments of the present disclosure.

Embodiments of the present disclosure further provide a non-transitory computer-readable storage medium storing a computer program, where the computer program is configured to perform the display processing method based on a virtual reality space, the model display method based on a virtual reality space, or the human-machine interaction method provided in embodiments of the present disclosure.

Embodiments of the present disclosure further provide a computer program, comprising:
instructions that, when executed by a processor, cause the processor to perform the display processing method based on a virtual reality space, the model display method based on a virtual reality space, or the human-machine interaction method provided in embodiments of the present disclosure.

Embodiments of the present disclosure provide a model display method based on a virtual reality space. The method comprises: generating a target gift model corresponding to a gift display instruction in response to the gift display instruction; determining a target display image layer corresponding to the target gift model from a plurality of image layers corresponding to a currently played virtual reality video, wherein a spatial position area corresponding to each image layer of the plurality of image layers has a different display distance from a current viewing position of a user; and displaying the target gift model in a target spatial position area corresponding to the target display image layer.

Embodiments of the present disclosure further provide a model display apparatus based on a virtual reality space. The apparatus comprises: a generation module, configured to generate a target gift model corresponding to a gift display instruction in response to the gift display instruction; a determination module, configured to determine, from a plurality of image layers corresponding to a currently played virtual reality video, a target display image layer corresponding to the target gift model, wherein a spatial position area corresponding to each image layer of the plurality of image layers has a different display distance from a current viewing position of a user; and a display module, configured to display the target gift model in a target spatial position area corresponding to the target display image layer.

Embodiments of the present disclosure further provide an electronic device. The electronic device comprises: a processor; and a memory configured to store instructions executable by the processor, where the processor is configured to read the executable instructions from the memory, and execute the instructions to implement the model display method based on a virtual reality space provided in embodiments of the present disclosure.

Embodiments of the present disclosure further provide a non-transitory computer-readable storage medium storing a computer program, where the computer program is configured to perform the model display method based on a virtual reality space provided in embodiments of the present disclosure.

In a first aspect, embodiments of the present disclosure provide a human-machine interaction method applied to an XR device. The method comprises:
presenting, a close gift panel corresponding to a gift entrance in a virtual space in response to a trigger operation on the gift entrance in the virtual space; and
presenting, in the virtual space, a sending effect of a virtual gift in response to a sending operation of a hand model on a virtual gift in the close gift panel in the virtual space.

In a second aspect, embodiments of the present disclosure provide a human-machine interaction apparatus configured in an XR device. The apparatus comprises:
a gift panel presentation module, configured to present, a close gift panel corresponding to a gift entrance in a virtual space in response to a trigger operation on the gift entrance in the virtual space; and
a gift sending module, configured to present, in the virtual space, a sending effect of a virtual gift in response to a sending operation of a hand model on a virtual gift in the close gift panel in the virtual space.

In a third aspect, embodiments of the present disclosure provide an electronic device. The electronic device comprises:
a processor and a memory, where the memory is configured to store a computer program, and the processor is configured to call and run the computer program stored in the memory, to perform the human-machine interaction method provided in the first aspect of the present disclosure.

In a fourth aspect, embodiments of the present disclosure provide a non-transitory computer-readable storage medium configured to store a computer program, where the computer program causes a computer to perform the human-machine interaction method provided in the first aspect of the present disclosure.

In a fifth aspect, embodiments of the present disclosure provide a computer program product comprising a computer program/instruction, where the computer program/instruction causes a computer to perform the human-machine interaction method provided in the first aspect of the present disclosure.

### BRIEF DESCRIPTION OF THE DRAWINGS

The above and other features, advantages, and aspects of embodiments of the present disclosure become more apparent with reference to the following specific implementations and in conjunction with the accompanying drawings. Throughout the drawings, the same or similar reference numerals denote the same or similar elements. It should be understood that the accompanying drawings are schematic and that parts and elements are not necessarily drawn to scale.
FIG. 1 is a schematic diagram of an application scenario of a virtual reality device according to some embodiments of the present disclosure;
FIG. 2 is a schematic flowchart of a display processing method based on a virtual reality space according to some embodiments of the present disclosure;
FIG. 3 is a schematic diagram of a display scenario based on a virtual reality space according to some embodiments of the present disclosure;
FIG. 4 is a schematic diagram of another display scenario based on a virtual reality space according to some embodiments of the present disclosure;
FIG. 5 is a schematic flowchart of another display processing method based on a virtual reality space according to some embodiments of the present disclosure;
FIG. 6 is a schematic diagram of another display scenario based on a virtual reality space according to some embodiments of the present disclosure;
FIG. 7 is a schematic diagram of another display scenario based on a virtual reality space according to some embodiments of the present disclosure;
FIG. 8 is a schematic diagram of another display scenario based on a virtual reality space according to some embodiments of the present disclosure;
FIG. 9 is a schematic diagram of another display scenario based on a virtual reality space according to some embodiments of the present disclosure;
FIG. 10A is a schematic diagram of another display scenario based on a virtual reality space according to some embodiments of the present disclosure;
FIG. 10B is a schematic diagram of another display scenario based on a virtual reality space according to some embodiments of the present disclosure;
FIG. 11 is a schematic diagram of another display scenario based on a virtual reality space according to some embodiments of the present disclosure;
FIG. 12 is a schematic diagram of a structure of a display processing apparatus based on a virtual reality space according to some embodiments of the present disclosure;
FIG. 13 is a schematic diagram of a structure of an electronic device according to some embodiments of the present disclosure.
FIG. 14 is a schematic flowchart of a model display method based on a virtual reality space according to some embodiments of the present disclosure;
FIG. 15 is a schematic diagram of a model display scenario based on a virtual reality space according to some embodiments of the present disclosure;
FIG. 16 is a schematic flowchart of another model display method based on a virtual reality space according to some embodiments of the present disclosure;
FIG. 17 is a schematic diagram of a hierarchical structure between a plurality of image layers according to some embodiments of the present disclosure;
FIG. 18 is a schematic diagram of a structure of a model display apparatus based on a virtual reality space according to some embodiments of the present disclosure;
FIG. 19 is a flowchart of a human-machine interaction method according to some embodiments of the present disclosure;
FIG. 20 is a schematic diagram of presenting a close gift panel in a virtual space according to some embodiments of the present disclosure;
FIG. 21(A), FIG. 21(B), and FIG. 21(C) are respectively different schematic diagrams of examples of page turning of a close gift panel in a virtual space according to some embodiments of the present disclosure;
FIG. 22 is a schematic diagram of presenting a close gift panel in a virtual space by triggering a far gift entry according to some embodiments of the present disclosure;
FIG. 23 is a schematic diagram of presenting a close gift panel in a virtual space by triggering a close gift entry according to some embodiments of the present disclosure;
FIG. 24 is a flowchart of a method for presenting a close gift panel in a virtual space according to some embodiments of the present disclosure;
FIG. 25 is a schematic diagram of presenting gift gifting guidance information in an experience model according to some embodiments of the present disclosure;
FIG. 26 is a flowchart of a method for gifting any virtual gift in a virtual space by a hand model according to some embodiments of the present disclosure;
FIG. 27 is a schematic diagram of a human-machine interaction apparatus according to some embodiments of the present disclosure; and
FIG. 28 is a schematic block diagram of an electronic device according to some embodiments of the present disclosure.

### DETAILED DESCRIPTION OF EMBODIMENTS

Embodiments of the present disclosure are described in more detail below with reference to the accompanying drawings. Although some embodiments of the present disclosure are shown in the drawings, it should be understood that the present disclosure may be implemented in various forms and should not be construed as being limited to the embodiments set forth herein. Rather, these embodiments are provided for a more thorough and complete understanding of the present disclosure. It should be understood that the accompanying drawings and the embodiments of the present disclosure are only for illustrative purposes, and are not intended to limit the scope of protection of the present disclosure.

It should be understood that the various steps described in the method implementations of the present disclosure may be performed in different orders, and/or performed in parallel. In addition, additional steps may be comprised and/or the execution of the illustrated steps may be omitted in the method implementations. The scope of the present disclosure is not limited in this respect.

The term "comprise/comprise" used herein and the variations thereof are an open-ended inclusion, namely, "comprise/comprise but not limited to". The term "based on" is "at least partially based on". The term "an embodiment" means "at least one embodiment". The term "another embodiment" means "at least one another embodiment". The term "some embodiments" means "at least some embodiments". Related definitions of the other terms will be given in the description below.

It should be noted that concepts such as "first" and "second" mentioned in the present disclosure are only used to distinguish different apparatuses, modules, or units, and are not used to limit the sequence of functions performed by these apparatuses, modules, or units or interdependence.

It should be noted that the modifiers "one" and "a plurality of" mentioned in the present disclosure are illustrative and not restrictive, and those skilled in the art should understand that unless the context clearly indicates otherwise, the modifiers should be understood as "one or more".

Names of messages or information exchanged between a plurality of apparatuses in the implementations of the present disclosure are used for illustrative purposes only, and are not used to limit the scope of these messages or information.

To solve the above technical problems or at least partially solve the above technical problems, the present disclosure provides a display processing method and apparatus based on a virtual reality space, a device, and a medium, which implement structured display of image layers related to a video between a virtual screen and a current viewing position of a user. Through hierarchical setting of distances between the image layers and the current viewing position of the user, depth information in the virtual reality space is fully used, and a three-dimensional display effect is implemented, which helps to improve a viewing experience of the user.

Some technical concepts or noun concepts involved in the present disclosure are described as follows:
A virtual reality device is a terminal that implements a virtual reality effect. Generally, the virtual reality device may be provided in the form of glasses, a head-mounted display (HMD), or contact lenses, to implement visual perception and other forms of perception. Certainly, the form implemented by the virtual reality device is not limited thereto, and may be further miniaturized or enlarged as required.

The virtual reality device described in the embodiments of the present disclosure may comprise but is not limited to the following types:
A computer virtual reality (PCVR) device, which uses a PC side to perform related calculation and data output of a virtual reality function, and an external computer virtual reality device uses data output by the PC side to implement a virtual reality effect.

A mobile virtual reality device, which supports a mobile terminal (such as a smart phone) to be arranged in various manners (such as a head-mounted display provided with a special card slot), and is connected to the mobile terminal in a wired or wireless manner, so that the mobile terminal performs related calculation of the virtual reality function and outputs data to the mobile virtual reality device, for example, the mobile terminal watches virtual reality video information through an APP.

An all-in-one virtual reality device, which is provided with a processor for performing related calculation of a virtual function, and thus has an independent virtual reality input and output function, does not need to be connected to a PC side or a mobile terminal, and has high freedom of use.

A virtual reality object is an object that interacts in a virtual scene, is controlled by a user or a robot program (for example, an artificial intelligence-based robot program), and can be an object that is stationary, moves, and performs various behaviors in the virtual scene, for example, a virtual person corresponding to the user in a live streaming scenario.

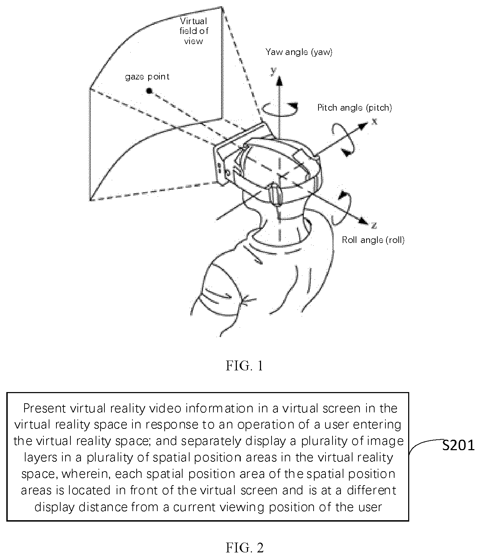

As shown in FIG. 1, an HMD is relatively lightweight and ergonomically comfortable, and provides high-resolution content with low latency. A sensor (for example, a nine-axis sensor) for detecting a posture is arranged in the virtual reality device, and is configured to detect a posture change of the virtual reality device in real time. If a user wears the virtual reality device, in response to a posture of a head of the user changing, a real-time posture of the head is transmitted to a processor, so as to calculate a gaze point of a sight line of the user in a virtual environment. An image in a three-dimensional model of the virtual environment that is within a gaze range (namely, a virtual field of view) of the user is calculated based on the gaze point, and is displayed on a display screen, so that a person can have an immersive experience as if watching in a real environment.

In some embodiments, when a user wears an HMD device and opens a predetermined application, for example, a video live streaming application, the HMD device runs a corresponding virtual scene. The virtual scene may be a simulation environment of a real world, or may be a semi-simulated and semi-fictional virtual scene, or may be a purely fictional virtual scene. The virtual scene may be any one of a two-dimensional virtual scene, a 2.5-dimensional virtual scene, or a three-dimensional virtual scene, and the embodiments of the present disclosure do not limit the dimension of the virtual scene. For example, the virtual scene may comprise a person, the sky, land, the sea, and the like, the land may comprise environmental elements such as a desert and a city, and the user may control a virtual object to move in the virtual scene, and may also interactively control a control, a model, display content, a person, and the like in the virtual scene in a manner of a control device such as a handle device or a bare-hand gesture.

To fully use depth information in a virtual reality space and improve an interactive experience of a user when watching a video, some embodiments of the present disclosure provide a display processing method based on a virtual reality space. The method is described below with reference to the embodiments.

FIG. 2 is a schematic flowchart of a display processing method based on a virtual reality space according to some embodiments of the present disclosure. The method may be performed by a display processing apparatus based on a virtual reality space. The apparatus may be implemented by software and/or hardware, and may generally be integrated into an electronic device. As shown in FIG. 2, the method comprises the following steps.

Step S201: Present virtual reality video information in a virtual screen in the virtual reality space in response to an operation of a user entering the virtual reality space; and separately display a plurality of image layers in a plurality of spatial position areas in the virtual reality space.

Each spatial position area of the spatial position areas is located in front of the virtual screen and is at a different display distance from a current viewing position of the user.

Compared with the prior art, the technical solution provided in the embodiments of the present disclosure has the following advantages.

In the display processing solution based on a virtual reality space provided in the embodiments of the present disclosure, virtual reality video information is displayed in a virtual screen in the virtual reality space in response to an operation of a user entering the virtual reality space, and a plurality of image layers are separately displayed in a plurality of spatial position areas in the virtual reality space, where each of the spatial position areas is located in front of the virtual screen and is at a different display distance from a current viewing position of the user. In this way, structured display of image layers related to a video between the virtual screen and the current viewing position of the user is implemented. Through hierarchical setting of distances between the image layers and the current viewing position of the user, depth information in the virtual reality space is fully used, and a three-dimensional display effect is implemented, which helps to improve a viewing experience of the user.

In the real world, when a live video stream is played, various types of information are displayed on a video interface, for example, bullet chat information and gift information may be displayed. In some embodiments, depth information in the virtual reality space is fully used, and different information is displayed in different image layers according to a scene requirement, to implement a hierarchical display effect.

In some embodiments, an operation of a user entering a virtual reality space is obtained, where the operation may be a detected operation of the user to turn on a switch of a virtual display device, etc. Then, virtual reality video information is displayed in a virtual screen in the virtual reality space in response to the operation of the user entering the virtual reality space, where the virtual screen corresponds to a canvas that is pre-built in a virtual scene and used to display related video, and the virtual reality video information is displayed in the virtual screen, for example, a live video or an online concert video is displayed in the virtual screen.

In some embodiments, a plurality of image layers are separately displayed in a plurality of spatial position areas in the virtual reality space, where spatial position areas corresponding to the image layers are at different display distances from a current viewing position of the user and are located in front of the virtual screen, that is, the plurality of image layers are displayed in a staggered manner between the current viewing position of the user and the virtual screen, to display different image layer information, and a three-dimensional effect of the display of the image layer information is visually presented. In this hierarchical structure of the image layers, some image layer information with a high attention requirement for the user in the scene may be displayed in a spatial position area that is relatively close to the user in a display distance, and some other image layer information with a low attention requirement for the user may be displayed in a spatial position area that is relatively far from the user in a display distance, so that depth information in the virtual reality space is fully used, "enhanced display", "weakened display", and the like of the image layer information are implemented in a display dimension, and the viewing experience of the user is improved.

It should be noted that the vertical coordinate values of the spatial position areas corresponding to the plurality of image layers on a vertical axis are different, so that the image layers are displayed in a staggered manner in a "near and far" manner visually for the user. In addition, to avoid display occlusion between the image layers, the coordinate values corresponding to the spatial position areas on a horizontal coordinate value may not be completely the same (that is, the image layers before and after comprise parts of the image layers that do not overlap in an X-axis direction), that is, the plurality of image layers are arranged in a staggered manner in a horizontal direction, or the coordinate values corresponding to the spatial position areas on a vertical coordinate value may not be completely the same (that is, the image layers before and after comprise parts of the image layers that do not overlap in a Y-axis direction), that is, the plurality of image layers are arranged in a staggered manner in a vertical direction, or the plurality of image layers may also be arranged in a staggered manner in both the horizontal direction and the vertical direction.

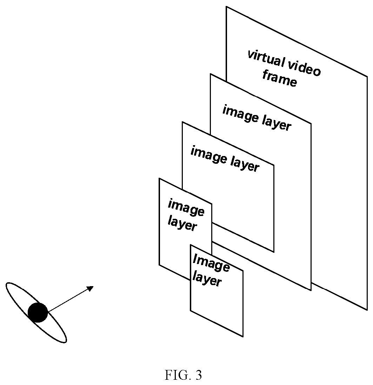

For example, as shown in FIG. 3, in response to an application scenario being a playback scenario of a live video stream, spatial position display areas corresponding to the image layers are sequentially located in front of a currently played virtual video frame, and the image layers are at different display distances from a current viewing position of the user. When the user watches in the virtual reality space, an image layer that is relatively close to the user in a display distance is apparently closer to eyes of the user, and is easier for the user to notice. For example, some image layers of an operation interface type are arranged at a position closest to the eyes of the user by using this hierarchical structure relationship, so that it is apparently more convenient for the user to perform operations.

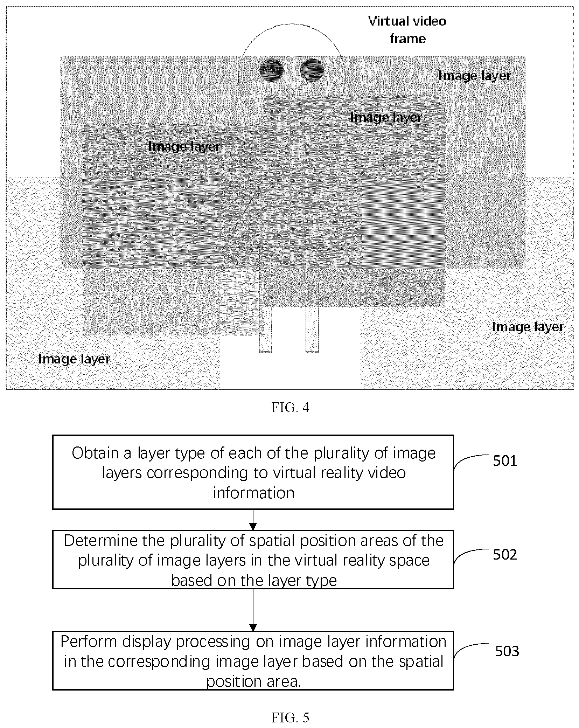

With reference to FIG. 3, to avoid front and back occlusion between the image layers, the horizontal coordinate values of the spatial position areas corresponding to the plurality of image layers are not completely the same, and the vertical coordinate values of the spatial position areas corresponding to the plurality of image layers are not completely the same. Therefore, as shown in FIG. 4, a viewing user can see image layer information on the plurality of image layers in front of the virtual screen.

It should be emphasized that, for the viewing user, the hierarchical structure between the image layers merely causes different attention sensitivities to the different image layers. With reference to FIG. 4, visually, the viewing user cannot directly see a hierarchical structure relationship between target display positions of the different image layers, but can only feel a distance between contents of the different image layers. Because the user prefers to pay attention to information closer to the user, attention to information on an image layer closest to the user is improved.

The following describes, with reference to embodiments, how to display a plurality of image layers in a virtual reality space in some possible examples. As shown in FIG. 5, separately displaying a plurality of image layers in a plurality of spatial position areas in the virtual reality space comprises.

Step 501: Obtain a layer type of each of the plurality of image layers corresponding to virtual reality video information.

The virtual reality video information is a video stream displayed in a virtual scene in the virtual reality space, and comprises but is not limited to a live video stream, a concert video stream, and the like.

In some embodiments, a layer type of each of the plurality of image layers corresponding to virtual reality video information is obtained, and the layer type may be labeled according to a scene, and comprises but is not limited to a plurality of types such as an operation user interface layer, an feed display layer, a gift display layer, and an expression display layer. Each layer type may comprise at least one sub-layer, for example, the operation user interface layer may comprise a control panel layer, and the like. Details are not described herein again.

Step 502: Determine the plurality of spatial position areas of the plurality of image layers in the virtual reality space based on the layer type.

In some embodiments, the plurality of spatial position areas of the plurality of image layers in the virtual reality space are determined based on the layer type, and the spatial position areas are at different display distances from a current viewing position of the user. In this way, visually, different layer types are at different distances from the user. Generally, the user first notices content on an image layer that is close to the user. Therefore, different information may be displayed by using the hierarchical structure between the image layers based on a scene requirement, to improve the viewing experience of the user.

In some embodiments, a display vector of an image layer may be adjusted based on change information of a sight line direction of the user, so that related information on the image layer is always displayed facing the user. The change information of the sight line of the user comprises a change direction and a change angle of a viewing angle of the user, and the like.

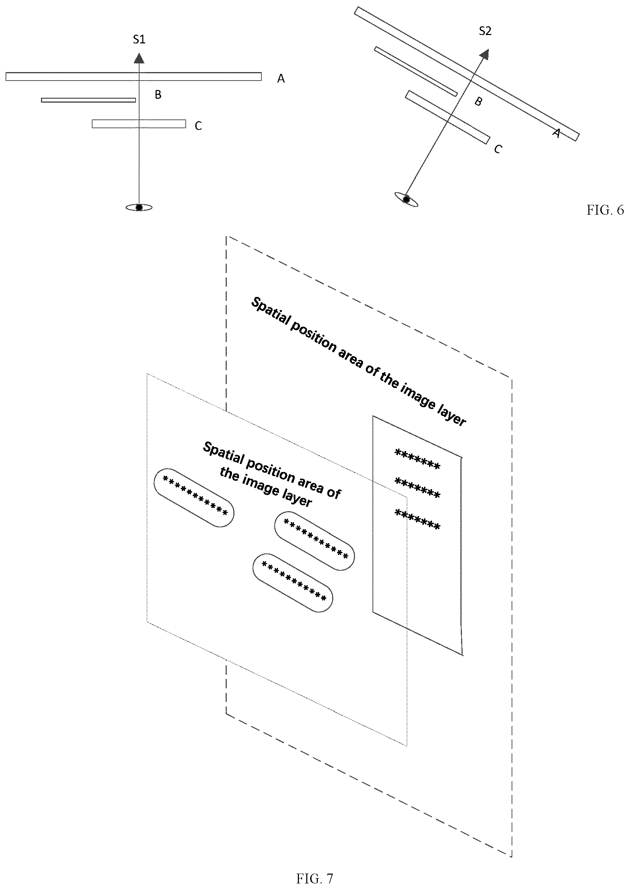

For example, as shown in FIG. 6, in response to it being detected that a sight line direction of the user changes from S1 to S2, the plurality of image layers A, B, and C are controlled to rotate from a direction facing S1 to a direction facing S2. In this way, a sight line following effect of the display spatial position area of the image layer is implemented.

Step 503: Perform display processing on image layer information in the corresponding image layer based on the spatial position area.

In some embodiments, after the spatial position area is determined, display processing is performed on image layer information in the corresponding image layer based on the spatial position area. That is, in an actual display process, as shown in FIG. 7, the image layer information on different image layers is displayed based on the spatial position area, that is, the image layer information is displayed in a spatial position area corresponding to the corresponding image layer, and a corresponding image layer does not need to be rendered (the display of image layer information of only two image layers is shown in the figure). In this way, occlusion between the image layers is reduced, and a viewing experience is improved. As mentioned above, to further avoid front and back occlusion between the image layers, display positions of the image layer information of different image layers may be displayed in a staggered manner, or spatial position areas of the different image layers may be arranged in a staggered manner as much as possible, to reduce an overlapping area between the image layers before and after.

It should be noted that when the display processing is performed on the image layer information in the corresponding image layer based on the spatial position area, it is only required to ensure that the corresponding image layer information is displayed in the corresponding spatial position area. A display manner, display content, and the like are not limited, and may be calibrated according to a scene requirement.

In some embodiments, in response to obtaining preset first-type first image layer information, the first-type first image layer information may be considered as a message that can be displayed in real time, for example, a "gift message" sent by a user. After the first image layer information is obtained, a first image layer corresponding to the first image layer information is determined.

For example, a first display level of the first image layer information may be determined based on an evaluation indicator set according to a scene, a second display level of each image layer that can display preset first-type information is obtained, and an image layer corresponding to a second level that matches the first display level is determined as the first image layer. Certainly, for example, the first image layer may also be determined in another manner, which is not listed one by one here.

For example, the first image layer information is displayed in a spatial position area corresponding to the first image layer, so that depth information in the virtual reality space is fully used to determine display positions of different image layer information.

A display position of the first image layer information in the spatial position area corresponding to the first image layer may be random, or may be set according to a related scene requirement.

In some embodiments, in response to obtaining preset second-type second image layer information, the second-type second image layer information may be image layer information that may not be displayed in real time. For example, in a live streaming scenario, because there may be actions of a plurality of users sending gift messages at the same time, to facilitate enhancing an atmosphere of a live streaming room and enabling the user to directly see the second image layer information sent by the user, the gift messages are usually displayed in the form of a message queue, and such gift messages may be considered as the second-type second image layer information.

In some embodiments, the second image layer information is added to a message queue of a second image layer corresponding to the second image layer information, where image layer information in the message queue is displayed in a spatial position area of the second image layer according to an order in the message queue.

In some embodiments, the image layer information in the message queue may be further divided into image layer information sub-types, and a display sub-area corresponding to each image layer information sub-type is determined in the spatial position area of the second image layer. In this way, when the image layer information in the message queue of the second image layer is displayed, the corresponding image layer information is displayed in the corresponding display sub-area in the spatial position area of the second image layer based on the image layer information sub-type of the image layer information. That is, image layer information of an image layer of a same image layer type may share one spatial position area, to avoid a complex hierarchical structure from affecting a viewing experience of the user.

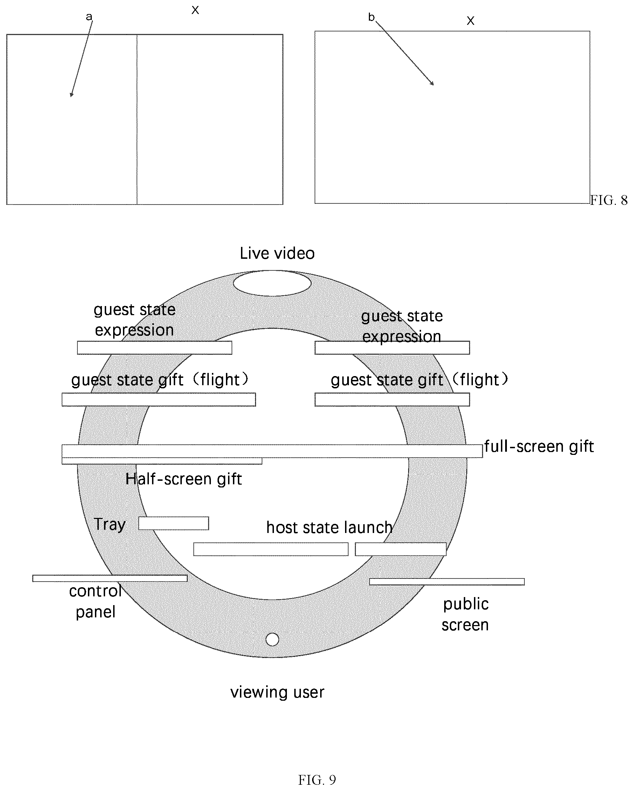

For example, in response to the second image layer information being a gift message and the second image layer being an image layer A, as shown in FIG. 8, the gift message may be divided into a half-screen gift message sub-type and a full-screen message sub-type, where a display sub-area corresponding to the half-screen gift message sub-type is a left half part of X, and a display sub-area corresponding to the full-screen gift message sub-type is all of X. Therefore, in response to it being obtained that a gift message to be displayed in a current message queue is a half-screen gift message a, a display position of a is determined in the left half part of X, and in response to it being obtained that a gift message to be displayed in the current message queue is a full-screen gift message b, a display position of b is determined on X.

In conclusion, in the display processing method based on a virtual reality space according to the embodiments of the present disclosure, virtual reality video information is displayed in a virtual screen in the virtual reality space in response to an operation of a user entering the virtual reality space, and a plurality of image layers are separately displayed in a plurality of spatial position areas in the virtual reality space, where each of the spatial position areas is located in front of the virtual screen and is at a different display distance from a current viewing position of the user. In this way, structured display of image layers related to a video between the virtual screen and the current viewing position of the user is implemented. Through hierarchical setting of distances between the image layers and the current viewing position of the user, depth information in the virtual reality space is fully used, and a three-dimensional display effect is implemented, which helps to improve a viewing experience of the user.

Based on the foregoing embodiments, to fully use depth information in a virtual display space, an image layer priority of each image layer may also be determined based on a scene requirement, and spatial position areas of different image layers are determined based on a level of the priority. According to an indicator such as importance of messages in a scene, the image layer information requiring a degree of attention of the user is divided into different image layers for display, further improving the viewing experience of the user.

In some embodiments, determining the plurality of spatial position areas of the plurality of image layers in the virtual reality space based on the layer type comprises: determining priority information of the plurality of image layers based on the plurality of layer types, and then determining the plurality of spatial position areas of the plurality of image layers in the virtual reality space based on the priority information.

The higher the priority information is, the more the image layer information displayed on the corresponding image layer needs to attract the attention of the user. Therefore, a distance between a corresponding target spatial area and a viewing position of the user is closer. The priority information corresponding to the layer type may be calibrated according to a scene requirement, and the priority information corresponding to the same layer type may be different in different scenes.

For example, when an application scenario is a live streaming scenario in a virtual reality space, as shown in FIG. 9, if layer types corresponding to the plurality of image layers comprise an operation user interface layer (comprising a control panel layer), an feed layer (comprising a public screen layer (used to display comment information and the like)), a gift display layer (comprising a tray layer (used to display a tray gift), a host and guest state gift layer (shown as a half-screen gift layer and a full-screen gift layer in the figure, used to display a full-screen gift or a half-screen gift sent by any viewing user of a current live video, etc.), and a guest state gift layer (used to display a flight gift sent by another viewing user, etc., comprising a host state launch layer (used to display a related gift launched by a current viewing user, etc.)), and an expression display layer (comprising a host state launch layer (used to display a related expression launched by the current viewing user, etc.)) and a guest state expression layer type (used to display an expression sent by another viewing user, etc.)), priority information of the plurality of layer types in the figure is a control layer = a public screen layer > a host state launch layer > a tray layer > a full-screen gift layer = a half-screen gift layer > a guest state gift layer > a guest state expression layer. The plurality of spatial position areas corresponding to the plurality of image layers are at different display distances from a viewing user, and a spatial position area of a layer type with a higher priority is closer to the viewing user. Therefore, because the control layer is closest to the current viewing user, it is convenient for the user to perform an interactive operation. In addition, the host state launch layer is also relatively close to the current viewing user, so that it is convenient for the current viewing user to first notice related information sent by the user.

It should be noted that in an actual execution process, in different application scenarios, manners of determining the plurality of spatial position areas of the plurality of image layers in the virtual reality space based on the priority information are different. The following is an example for description.

In some embodiments, considering that a virtual video in a virtual scene is relatively fixedly displayed in the virtual scene, a spatial position area of a corresponding image layer is also relatively fixedly set. Spatial position areas corresponding to different priority information are stored in a preset database. Therefore, the preset database is queried based on the priority information, to obtain the plurality of spatial position areas corresponding to the plurality of image layers.

In some embodiments, considering that the corresponding image layer is arranged in front of a video display position, in some embodiments, a video display position of the virtual reality video information in the virtual reality space is determined. The video display position may be determined based on a position of a built canvas for displaying video (namely, a position of the virtual screen), and then spatial position areas of the image layers are sequentially determined in a direction closer to a current viewing position of the user one by one starting from the video display position based on a preset distance interval and the priority information in an order from low to high, to determine the plurality of spatial position areas of the plurality of image layers. The preset distance interval may be calibrated based on experimental data.

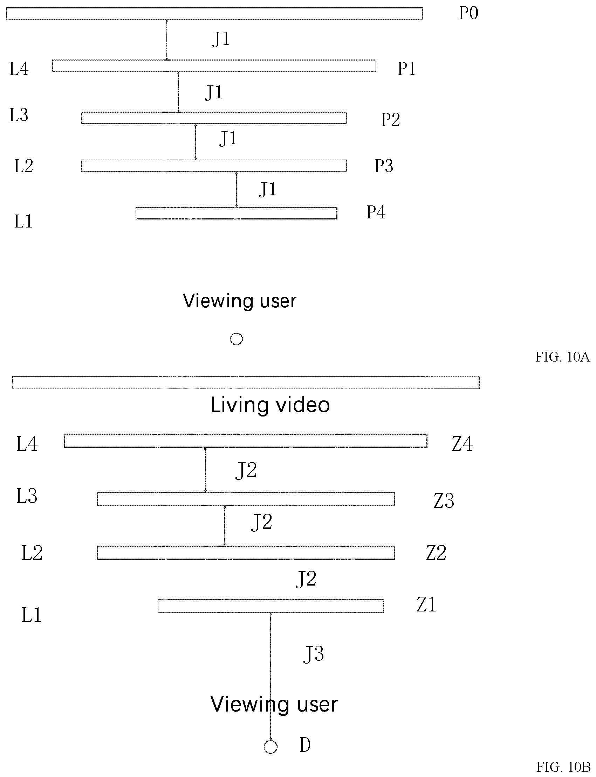

In some embodiments, as shown in FIG. 10A, if it is determined that the video display position of the virtual reality video information in the virtual reality space is P0, the preset distance interval is J1, and the plurality of image layers in an order from high to low of the priority information are L 1, L2, L3, and L4, a spatial position area of L4 is determined to be located at P1 that is J1 away from P0 in a direction closer to the current viewing position of the user, a spatial position area of L3 is determined to be located at P2 that is J1 away from P1 in the direction closer to the current viewing position of the user, a spatial position area of L2 is determined to be located at P3 that is J1 away from P2 in the direction closer to the current viewing position of the user, and a spatial position area of L1 is determined to be located at P4 that is J1 away from P3 in the direction closer to the current viewing position of the user.

In some embodiments, considering that the corresponding image layer is arranged in a sight line direction of the viewing user at the video display position, in some embodiments, a target image layer corresponding to a highest priority is determined based on the priority information, and a spatial position area of the target image layer in the virtual reality space is determined. A determination manner of the spatial position area of the target image layer in the virtual reality space is different in different application scenarios. In some possible implementations, a spatial position area located at a preset distance threshold away from the current viewing position of the user in the sight line direction of the user may be determined. In some possible implementations, a total distance between the current viewing position of the user and the video display position of the virtual reality video information in the virtual reality space may be determined, and a spatial position area located at a preset proportion threshold of the total distance is determined starting from the video display position, thereby avoiding an image layer displayed being too close to the viewing user, such that information visible in a viewing angle range of the user is limited.

For example, after the spatial position area of the target image layer is determined, spatial position areas of the other image layers are sequentially determined in a direction away from the current viewing position of the user one by one starting from the spatial position area based on the preset distance interval and the priority information in an order from high to low, to determine the plurality of spatial position areas of the plurality of image layers. The preset distance interval may be the same as or different from the preset distance interval in the foregoing embodiments, and may be set according to a scene requirement.

For example, in some embodiments, as shown in FIG. 10B, the preset distance interval is J2, the plurality of image layers in an order from high to low of the priority information are L1, L2, L3, and L4, the target image layer is L1, a current viewing position of the user is determined as D, and then Z1 that is J3 away from D in a direction away from the current viewing position of the user is determined as a spatial position area of L1, a spatial position area of L2 is determined to be located at Z2 that is J2 away from Z1 in the direction away from the current viewing position of the user, a spatial position area of L3 is determined to be located at Z3 that is J2 away from Z2 in the direction away from the current viewing position of the user, and a spatial position area of L4 is determined to be located at Z4 that is J2 away from Z3 in the direction away from the current viewing position of the user.

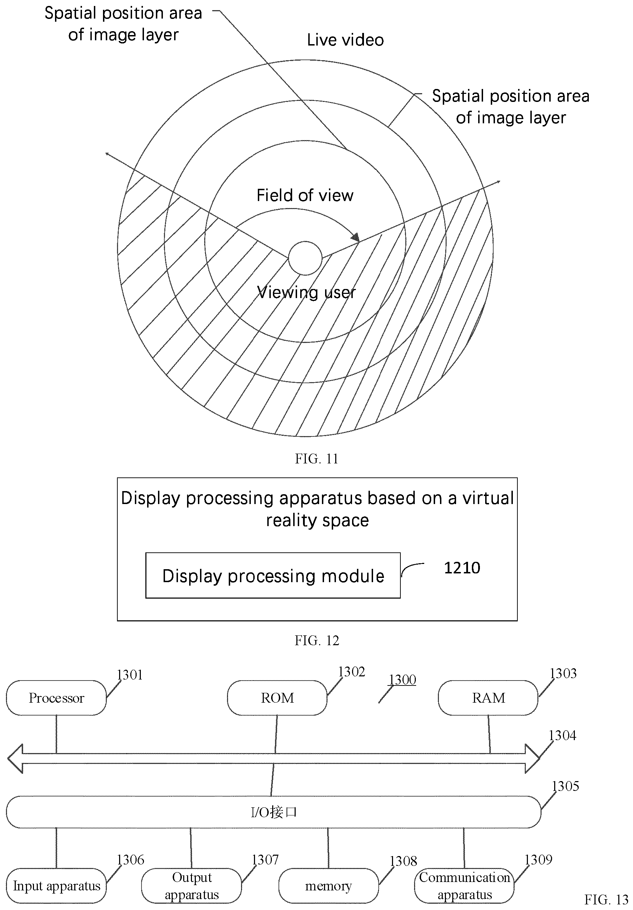

It should be noted that a position range corresponding to the spatial position area mentioned in the foregoing embodiments may be determined based on a shape of the spatial position area and the like. A spatial position area corresponding to an identical image layer may be continuous, or may be divided into a plurality of modules as shown in FIG. 9. In some embodiments, considering spatial characteristics of the virtual reality space, as shown in FIG. 11, each image layer is an arc-shaped area (a non-shaded area in the figure), the arc-shaped area is located in a viewing angle range of a viewing user, a spatial position area corresponding to each image layer is located on the corresponding arc-shaped area (two image layers are shown in the figure), and a center position of the arc-shaped area corresponding to each image layer is located in a sight line direction of the user corresponding to the current viewing position of the user. Therefore, the viewing user has a stronger three-dimensional viewing effect when watching.

In conclusion, in the display processing method based on a virtual reality space according to this embodiment of the present disclosure, spatial position areas of image layers are determined based on priority information of the image layers, the spatial position areas of the different image layers are at different display distances from a current viewing position of the user, and through structured image layer setting, hierarchical display of different image layer information is satisfied, depth information in the virtual reality space is fully used, and a three-dimensional display effect is implemented.

To implement the foregoing embodiments, the present disclosure further provides a display processing apparatus based on a virtual reality space.

FIG. 12 is a schematic diagram of a structure of a display processing apparatus based on a virtual reality space according to some embodiments of the present disclosure. The apparatus may be implemented by software and/or hardware, and may generally be integrated into an electronic device to perform display processing based on the virtual reality space. As shown in FIG. 12, the apparatus comprises a display processing module 1210, where

The display processing module 1210 is configured to display virtual reality video information in a virtual screen in the virtual reality space in response to an operation of a user entering the virtual reality space; and separately display a plurality of image layers in a plurality of spatial position areas in the virtual reality space.

Each of the spatial position areas is located in front of the virtual screen and is at a different display distance from a current viewing position of the user.

The display processing apparatus based on a virtual reality space provided in this embodiment of the present disclosure may perform the display processing method based on a virtual reality space provided in any embodiment of the present disclosure, and has corresponding functional modules and beneficial effects of the method. The implementation principles are similar, and details are not described herein again.

To implement the foregoing embodiments, the present disclosure further provides a computer program product, comprising a computer program/instructions, where the computer program/instructions, when executed by a processor, implement the display processing method based on a virtual reality space in the foregoing embodiments.

FIG. 13 is a schematic diagram of a structure of an electronic device according to some embodiments of the present disclosure.

Reference is made to FIG. 13 below, which shows a schematic diagram of a structure of an electronic device 1300 suitable for implementing the embodiments of the present disclosure. The electronic device 1300 in the embodiments of the present disclosure may comprise, but is not limited to, mobile terminals such as a mobile phone, a notebook computer, a digital broadcast receiver, a personal digital assistant (PDA), a tablet computer (PAD), a portable multimedia player (PMP), and a vehicle-mounted terminal (such as a vehicle navigation terminal), and fixed terminals such as a digital TV and a desktop computer. The electronic device 1300 shown in FIG. 13 is merely an example, and shall not impose any limitation on the function and scope of use of the embodiments of the present disclosure.

As shown in FIG. 13, the electronic device 1300 may comprise a processor (for example, a central processing unit, a graphics processing unit, etc.) 1301 that may perform a variety of appropriate actions and processing in accordance with a program stored in a read-only memory (ROM) 1302 or a program loaded from a memory 1308 into a random access memory (RAM) 1303. The RAM 1303 further stores various programs and data required for the operation of the electronic device 1300. The processor 1301, the ROM 1302, and the RAM 1303 are connected to each other through a bus 1304. An input/output (I/O) interface 1305 is also connected to the bus 1304.

Generally, the following apparatuses may be connected to the I/O interface 1305: an input apparatus 1306 comprising, for example, a touch screen, a touchpad, a keyboard, a mouse, a camera, a microphone, an accelerometer, and a gyroscope; an output apparatus 1307 comprising, for example, a liquid crystal display (LCD), a speaker, and a vibrator; the memory 1308 comprising, for example, a tape and a hard disk; and a communication apparatus 1309. The communication apparatus 1309 may allow the electronic device 1300 to perform wireless or wired communication with other devices to exchange data. Although FIG. 13 shows the electronic device 1300 having various apparatuses, it should be understood that it is not required to implement or have all of the shown apparatuses. It may be an alternative to implement or have more or fewer apparatuses.

In particular, according to some embodiments of the present disclosure, the process described above with reference to the flowcharts may be implemented as a computer software program. For example, this embodiment of the present disclosure comprises a computer program product, which comprises a computer program carried on a non-transitory computer-readable medium, where the computer program comprises program code for performing the method shown in the flowchart. In such an embodiment, the computer program may be downloaded and installed from a network through the communication apparatus 1309, or installed from the memory 1308, or installed from the ROM 1302. When the computer program is executed by the processor 1301, the above-mentioned functions defined in the display processing method based on a virtual reality space in the embodiments of the present disclosure are performed.

To solve the above technical problems or at least partially solve the above technical problems, the present disclosure provides a model display method and apparatus based on a virtual reality space, a device, and a medium, which fully use depth information of the virtual reality space to implement a three-dimensional display effect of a gift model, and improve an interactive experience of a user on the basis of implementing gift sending interaction in the virtual reality space.

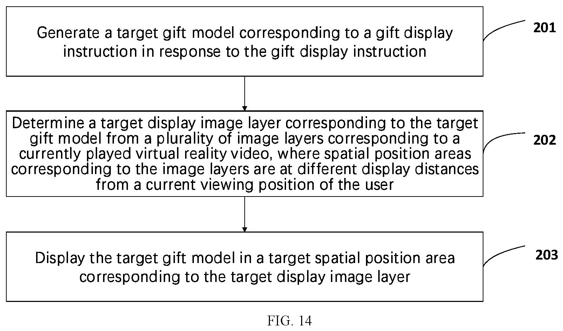

FIG. 14 is a schematic flowchart of a model display method based on a virtual reality space according to some embodiments of the present disclosure. The method may be performed by a model display apparatus based on a virtual reality space. The apparatus may be implemented by software and/or hardware, and may generally be integrated into an electronic device. As shown in FIG. 14, the method comprises the following steps:
Step 201: Generate a target gift model corresponding to a gift display instruction in response to the gift display instruction.

The target gift model is a model that can be displayed in a virtual reality space, and comprises but is not limited to one or more of a combination of text, a picture, an animation, and the like. The target gift model may be in a 2D form or a 3D form, and the like, which are not listed one by one here.

It should be noted that in the embodiments of the present disclosure, the gift display instruction is obtained in different manners in different application scenarios. The following is an example:

In some possible examples, the user may trigger and input the gift display instruction by using a preset button on a control device (such as a handle device or the like). There may be a plurality of other manners for the user to input the gift display instruction. Compared with a manner of using a button of a physical device to trigger and call a shooting function, this manner proposes an improved solution of VR control without using the button of the physical device, which can solve the technical problem that the physical device button is easily damaged, thereby easily affecting the user control.

For example, image information of the user captured by a camera may be monitored, then whether a preset condition for displaying an interactive component model (a component model for interaction, and each interactive component model is pre-bound to an interactive function event) is met is determined based on a hand of the user or a handheld device (such as a handle) of the user in the image information. If it is determined that the preset condition for displaying the interactive component model is met, at least one interactive component model is displayed in the virtual reality space. Finally, an interactive function event pre-bound to the interactive component model selected by the user is executed by recognizing action information of the hand of the user or the handheld device of the user.

For example, a hand image of the user or a handheld device image of the user may be captured by using the camera, and a hand gesture of the user or a position change of the handheld device in the image is determined based on image recognition technology. If it is determined that the hand of the user or the handheld device is lifted by a specific amplitude, and a virtual hand or a virtual handheld device of the user mapped in the virtual reality space enters a current viewing angle range of the user, the interactive component model may be displayed in the virtual reality space. Based on the image recognition technology, in response to the user lifting the handheld device, an interactive component model in the form of a floating ball may be called out, where each floating ball represents one control function, and the user may interact based on the floating ball function. For example, floating balls 1, 2, 3, 4, and 5 may correspond to interactive component models such as "Gift 1 display", "Gift 2 display", "Gift 3 display", "More gifts", and "Cancel".

After the interactive component model in the form of the floating ball is called out, a position of the hand of the user or the handheld device is recognized based on a subsequently monitored hand image of the user or a handheld device image of the user, and is mapped in the virtual reality space, to determine a spatial position of a corresponding click mark. If the spatial position of the click mark matches a spatial position of a target interactive component model in the displayed interactive component models, it is determined that the target interactive component model is the interactive component model selected by the user. Finally, the interactive function event pre-bound to the target interactive component model is executed.

The user may call out and display the interactive component model in the form of the floating ball by lifting a handle of a left hand, and then select and click an interactive component therein by moving a position of a handle of a right hand. On the side of the VR device, a position of the handle of the right hand is recognized based on a handle image of the user, and is mapped in the virtual reality space, to determine a spatial position of a corresponding click mark (for example, a ray trajectory model may be mapped in the virtual reality space, and a spatial position of the click mark is indicated based on a trajectory end position of the ray trajectory model). If the spatial position of the click mark matches a spatial position of the interactive component model of "Gift 1 display", it is determined that the user selects to click the function of "Gift 1 display". Finally, the interactive function event pre-bound to the interactive component model of "Gift 1 display" is executed, that is, a gift display instruction for a gift model corresponding to the gift 1 is triggered.

In some embodiments, a corresponding gift display control model may also be displayed in the virtual reality space. In response to the gift display control model being triggered, the gift display instruction is obtained, where the gift display control model may be triggered by selecting and clicking through moving a position of the handle of the right hand. Reference may be made to the foregoing embodiments. In some embodiments, to facilitate the user to perform an interactive operation, the gift display control model may be displayed in a spatial position area of an image layer closest to a current viewing position of the user.

In some embodiments, after the gift display instruction mentioned above is obtained, the target gift model corresponding to the gift display instruction is generated.

Gift model rendering information corresponding to the gift display instruction may be determined, where the gift model rendering information is used to render a gift image or an animation in a gift model, and then operation object information corresponding to the gift display instruction is obtained, where the operation object information comprises but is not limited to a user nickname, a user avatar, and the like that are obtained with user authorization. The target gift model corresponding to the gift display instruction is generated based on the gift model rendering information and the operation object information. In this way, the operation object information and the like can be learned visually based on the target gift model, improving an interactive experience of the user.

In some embodiments, in a case where the gift display instruction is obtained in response to the gift display control model being triggered, a gift panel comprising a plurality of candidate gift models may be displayed, and a candidate gift model selected by the user in the gift panel is obtained as the target gift model, where the target gift model may be selected by selecting and clicking through moving a position of the handle of the right hand.

Step 202: Determine a target display image layer corresponding to the target gift model from a plurality of image layers corresponding to a currently played virtual reality video, where spatial position areas corresponding to the image layers are at different display distances from a current viewing position of the user.

In some embodiments, the plurality of image layers corresponding to the currently played virtual reality video, where the spatial position areas corresponding to the image layers are at different display distances from the current viewing position of the user. Therefore, hierarchical display of different image layer information may be implemented. Visually, different image layer types are at different distances from the user. Generally, the user first notices content on an image layer that is close to the user. Therefore, the target display image layer corresponding to the target gift model may be determined by using the hierarchical structure between the image layers according to a scene requirement.

It should be noted that in different application scenarios, manners of determining the target display image layer corresponding to the target gift model from the plurality of image layers corresponding to the currently played virtual reality video are different. The following is an example for description.

In some embodiments, first priority level information of the target gift model is recognized, second priority level information of each of the plurality of image layers is determined, and an image layer corresponding to second priority level information that matches the first priority level information is determined as the target display image layer.

That is, in some embodiments, the first priority level information of the target gift model may be determined based on preset value information of the target gift model on a corresponding platform, the second priority level information is set for each image layer based on a distance between a display position of the current user and the image layer, and the image layer corresponding to the second priority level information that matches the first priority level information is determined as the target display image layer. In some embodiments, depth information in the virtual reality space is fully used to determine a degree of closeness of a display distance from a current viewing distance of the user according to a priority level of the target gift model in a scene.

In some embodiments, a gift type of the target gift model is recognized, and an image layer that matches the gift type in the plurality of image layers is determined as the target display image layer.

In some embodiments, displayable gift types corresponding to image layers each of which can display a gift model may be preset in the plurality of image layers. After the gift type of the target gift model is recognized, the target display image layer is determined based on the displayable gift types corresponding to the image layers. In some embodiments, depth information in the virtual reality space is fully used to determine a degree of closeness of a display distance from a current viewing distance of the user according to the gift type of the target gift model. For example, if the plurality of image layers comprise a full-screen gift layer, and the gift type of the target gift model is a full-screen gift, a corresponding target gift model is displayed in the full-screen gift layer.

Step 203: Display the target gift model in a target spatial position area corresponding to the target display image layer.

Compared with the prior art, the technical solution provided in the embodiments of the present disclosure has the following advantages.

In the model display solution based on a virtual reality space provided in the embodiments of the present disclosure, a target gift model corresponding to a gift display instruction is generated in response to the gift display instruction, a target display image layer corresponding to the target gift model is determined from a plurality of image layers corresponding to a currently played virtual reality video, where spatial position areas corresponding to the image layers are at different display distances from a current viewing position of the user, and then the target gift model is displayed in a target spatial position area corresponding to the target display image layer. In this way, depth information of the virtual reality space is fully used to implement a three-dimensional display effect of the gift model, and an interactive experience of a user is improved on the basis of implementing gift sending interaction in the virtual reality space.

In some embodiments, after the target display image layer is determined, the target gift model is displayed in the target spatial position area corresponding to the target display image layer, to implement gift sending interaction in a virtual display control. On the basis of simulating gift sending interaction in the real world, depth information in the virtual reality space is also fully used, improving an interactive experience.

It should be noted that a manner of displaying the target gift model in the target spatial position area corresponding to the target display image layer comprises but is not limited to at least one of the manners mentioned in the following embodiments.

In some embodiments, a display path of the target gift model is determined, and the target gift model is controlled to be displayed in the target spatial position area based on the display path, where the display path is located in the target spatial position area, and the display path may be calibrated according to a scene requirement.

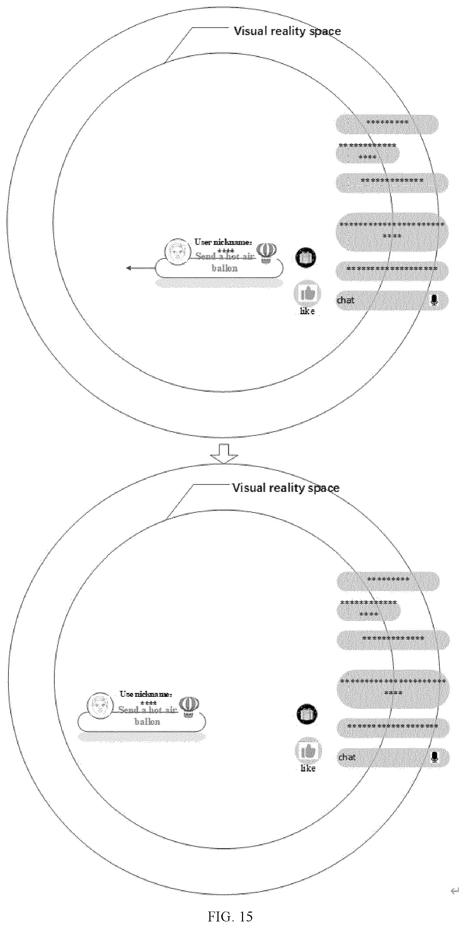

For example, as shown in FIG. 15, the target gift model is as shown in the figure, the target gift model slides in from a right side to a left side in a corresponding target space display area, stops moving in response to a length of a sliding path being equal to a preset length threshold, and is fixedly displayed at a corresponding position.

In some embodiments, a display duration of the target gift model is determined, where the display duration may be preset, or may be determined according to a rule set according to a scene. For example, the rule set according to the scene is to determine the display duration based on a quantity of currently displayed target gift models, the larger the quantity of target gifts is, the longer the corresponding display duration is to enhance an atmosphere of playback. For example, the target gift model is controlled to be displayed in the target spatial position area based on the display duration, and the target gift model stops being displayed after the display duration reaches a preset display duration.

In conclusion, in the model display method based on a virtual reality space according to this embodiment of the present disclosure, a target gift model corresponding to a gift display instruction is generated in response to the gift display instruction, a target display image layer corresponding to the target gift model is determined from a plurality of image layers corresponding to a currently played virtual reality video, where spatial position areas corresponding to the image layers are at different display distances from a current viewing position of the user, and then the target gift model is displayed in a target spatial position area corresponding to the target display image layer. In this way, depth information of the virtual reality space is fully used to implement a three-dimensional display effect of the gift model, and an interactive experience of a user is improved on the basis of implementing gift sending interaction in the virtual reality space.

Based on the foregoing embodiments, it may be understood that in the real world, in response to a live video stream being played, various types of information are displayed on a video interface, for example, a bullet screen message may be displayed, gift information may be displayed, and the like. In some embodiments, depth information in the virtual reality space is fully used to split and display different information in different image layers according to a scene requirement, to implement a hierarchical display effect.

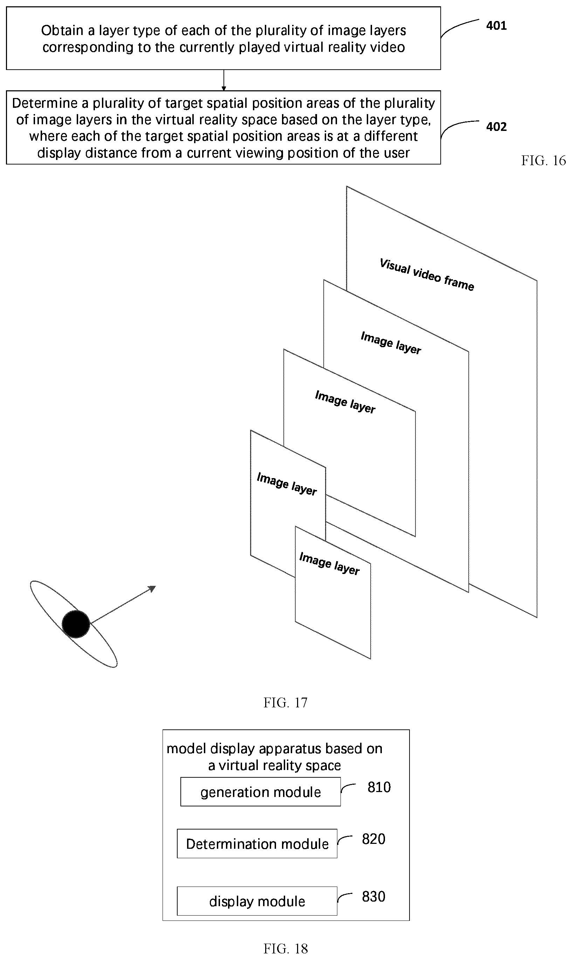

Therefore, in some embodiments, as shown in FIG. 16, before the determining a target display image layer corresponding to the target gift model from a plurality of image layers corresponding to a currently played virtual reality video, the method further comprises the following steps.

Step 401: Obtain a layer type of each of the plurality of image layers corresponding to the currently played virtual reality video.

Step 402: Determine a plurality of target spatial position areas of the plurality of image layers in the virtual reality space based on the layer type, where each of the target spatial position areas is at a different display distance from a current viewing position of the user.

In some embodiments, the layer type of each of the plurality of image layers corresponding to the currently played virtual reality video is obtained, and the layer type may be calibrated according to a scene, and comprises but is not limited to a plurality of types such as an operation user interface layer, an feed display layer, a gift display layer, and an expression display layer. Each layer type may comprise at least one sub-layer, for example, the operation user interface layer may comprise a control panel layer, and the like. Details are not described herein again.

Then, the plurality of target spatial position areas of the plurality of image layers in the virtual reality space are determined based on the layer type, and each of the target spatial position areas is at a different display distance from the current viewing position of the user. In this way, visually, different layer types are at different distances from the user. Generally, the user first notices content on an image layer that is close to the user. Therefore, different information may be displayed by using the hierarchical structure between the image layers based on a scene requirement, to improve the viewing experience of the user.

It should be noted that the spatial position areas corresponding to the plurality of image layers have different vertical coordinate values on a vertical axis, to implement "near and far" staggered display in the vision of the user. In addition, to avoid display occlusion between the image layers, horizontal coordinate values corresponding to the target spatial position areas may be not completely the same (namely, image layer parts that are not overlapped in an X-axis direction are comprised between image layers before and after). That is, the plurality of image layers are arranged in a staggered manner in a horizontal direction, or vertical coordinate values corresponding to the target spatial position areas may be not completely the same (namely, image layer parts that are not overlapped in a Y-axis direction are comprised between image layers before and after). That is, the plurality of image layers are arranged in a staggered manner in a vertical direction, or the plurality of image layers may be arranged in a staggered manner in the horizontal direction and the vertical direction at the same time.

For example, as shown in FIG. 17, in response to an application scenario is a live video stream playback scenario, corresponding spatial position display areas of the image layers are sequentially located in front of a currently played virtual video frame, and display distances between the different image layers and a current viewing position of the user are different. With reference to FIG. 17, to avoid front and back occlusion between the image layers, horizontal coordinate values of the spatial position areas corresponding to the plurality of image layers are not completely the same, and vertical coordinate values of the spatial position areas corresponding to the plurality of image layers are not completely the same. When the user watches in the virtual reality space, an image layer at a closer display distance is apparently closer to human eyes of the user, and the user is more likely to notice the image layer. For example, by using such a hierarchical structure relationship, some image layers of an operation interface type are arranged closest to the human eyes of the user, which can apparently facilitate the operation of the user. Therefore, in some embodiments, a distance between a target spatial display area corresponding to the target display image layer in which the target gift model is displayed and human eyes of the user is adapted to a degree of attention that the target gift model needs to attract from the user.

It should be emphasized that, for the viewing user, the hierarchical structure between the image layers merely indicates that attention sensitivity to different image layers is different. Visually, the viewing user cannot visually see the hierarchical structure relationship between the spatial position areas of the different image layers, but can only feel a distance between contents of the different image layers and the like. Because the user tends to pay attention to information that is closer to the user, attention to information on the image layer closest to the user is improved.

To fully use depth information in a virtual display space, an image layer priority of each image layer may also be determined based on a scene requirement, and spatial position areas of different image layers are determined based on a level of the priority. According to an indicator such as importance of the target gift model, the target gift model is divided into an adapted target display image layer for display, further improving the viewing experience of the user.

In some embodiments, determining the plurality of spatial position areas of the plurality of image layers in the virtual reality space based on the layer type comprises: determining a plurality of second priority information of the plurality of image layers based on the plurality of layer types, and then determining the plurality of spatial position areas of the plurality of image layers in the virtual reality space based on the plurality of second priority information.

The higher the second priority information is, the more the image layer information displayed on the corresponding image layer needs to attract the attention of the user. Therefore, a distance between a corresponding target spatial area and a viewing position of the user is closer. The priority information corresponding to the layer type may be calibrated according to a scene requirement, and the priority information corresponding to the same layer type may be different in different scenes.

It should be noted that in an actual execution process, in different application scenarios, manners of determining the plurality of spatial position areas of the plurality of image layers in the virtual reality space based on the second priority information are different. The following is an example for description.

In some embodiments, considering that the corresponding image layer is arranged in front of a video display position, in some embodiments, a video display position of the virtual reality video in the virtual reality space is determined. The video display position may be determined based on a position of a built canvas for displaying video, and then spatial position areas of the image layers are sequentially determined in a direction closer to a current viewing position of the user one by one starting from the video display position based on a preset distance interval and the second priority information in an order from low to high, to determine the plurality of spatial position areas of the plurality of image layers. The preset distance interval may be calibrated based on experimental data.

In some embodiments, considering that the corresponding image layer is arranged in a sight line direction of the viewing user at the video display position, in some embodiments, a target image layer corresponding to a highest priority is determined based on the second priority information, and a spatial position area of the target image layer in the virtual reality space is determined. A determination manner of the spatial position area of the target image layer in the virtual reality space is different in different application scenarios.

In some possible implementations, a spatial position area located at a preset distance threshold away from the current viewing position of the user in the sight line direction of the user may be determined. In some possible implementations, a total distance between the current viewing position of the user and the video display position of the virtual reality video in the virtual reality space may be determined, and a spatial position area located at a preset proportion threshold of the total distance is determined starting from the video display position, thereby avoiding an image layer displayed being too close to the viewing user, such that information visible in a viewing angle range of the user is limited.

For example, after the spatial position area of the target image layer is determined, spatial position areas of the other image layers are sequentially determined in a direction away from the current viewing position of the user one by one starting from the spatial position area based on the preset distance interval and the second priority information in an order from high to low, to determine the plurality of spatial position areas of the plurality of image layers. The preset distance interval may be the same as or different from the preset distance interval in the foregoing embodiments, and may be set according to a scene requirement.

In some embodiments, considering spatial characteristics of the virtual reality space, as shown in FIG. 11, this is a schematic diagram of another hierarchical structure between a plurality of image layers according to some embodiments of the present disclosure. Each image layer is an arc-shaped area (a non-shaded area in the figure), the arc-shaped area is located in a viewing angle range of a viewing user, a spatial position area corresponding to each image layer is located on the corresponding arc-shaped area (two image layers are shown in the figure), and a center position of the arc-shaped area corresponding to each image layer is located in a sight line direction of the user corresponding to the current viewing position of the user.

Therefore, in some embodiments, a display distance between each image layer and the current viewing position of the user may be determined based on the plurality of layer types, for example, the display distance between each image layer and the current viewing position of the user is determined based on the second priority information corresponding to the layer type. The higher the second priority is, the smaller the display distance between the corresponding image layer and the viewing position of the user is. A determination manner of the display distance may refer to the determination manner of the position of the spatial position area in the foregoing embodiments. Then, an arc-shaped area of each image layer is determined by using the current viewing position of the user as a center of a circle and a corresponding display distance as a radius, and extending in a sight line direction of the user. A range corresponding to the arc-shaped area is related to a viewing angle of the user, and it is determined that the arc-shaped area is a spatial position area of the corresponding image layer.

In an actual execution process, the target display image layer is an image layer that is most adapted to the target gift model in a corresponding scene. For example, as shown in FIG. 9, this is a schematic diagram of another hierarchical structure between a plurality of image layers according to some embodiments of the present disclosure. If layer types corresponding to the plurality of image layers comprise an operation user interface layer (comprising a control panel layer), an feed layer (comprising a public screen layer (used to display comment information and the like)), a gift display layer (comprising a tray layer (used to display a tray gift), a host and guest state gift layer (shown as a half-screen gift layer and a full-screen gift layer in the figure, used to display a full-screen gift or a half-screen gift sent by any viewing user of a current live video, etc.), and a guest state gift layer (used to display a flight gift sent by another viewing user, etc., comprising a host state launch layer (used to display a related gift launched by a current viewing user, etc.)), and an expression display layer (comprising a host state launch layer (used to display a related expression launched by the current viewing user, etc.) and a guest state expression layer type (used to display an expression sent by another viewing user, etc.)), priority information of the plurality of layer types in the figure is a control layer = a public screen layer > a host state launch layer > a tray layer > a full-screen gift layer = a half-screen gift layer > a guest state gift layer > a guest state expression layer. The plurality of spatial position areas corresponding to the plurality of image layers are at different display distances from a viewing user, and a spatial position area of a layer type with a higher priority is closer to the viewing user.

In a case where the target gift model is a tray gift, the target display image layer is an image layer corresponding to a tray layer type. In a case where the target gift model is a full-screen gift, the target display image layer is an image layer corresponding to a gift layer type.

In conclusion, in the model display method based on a virtual reality space according to the embodiments of the present disclosure, the plurality of image layers corresponding to the virtual reality video are set, the spatial position areas of the different image layers are at different display distances from a current viewing position of the user, and through structured image layer setting, hierarchical display of different image layer information is satisfied, depth information in the virtual reality space is fully used, and a three-dimensional display effect of the target gift model is implemented.

To implement the foregoing embodiments, the present disclosure further provides a model display apparatus based on a virtual reality space.

FIG. 18 is a schematic diagram of a structure of a model display apparatus based on a virtual reality space according to some embodiments of the present disclosure. The apparatus may be implemented by software and/or hardware, and may generally be integrated into an electronic device to perform model display based on the virtual reality space. As shown in FIG. 18, the apparatus comprises: a generation module 810, a determination module 820, and a display module 830, where
The generation module 810 is configured to generate a target gift model corresponding to a gift display instruction in response to the gift display instruction;
The determination module 820 is configured to determine a target display image layer corresponding to the target gift model from a plurality of image layers corresponding to a currently played virtual reality video, where spatial position areas corresponding to the image layers are at different display distances from a current viewing position of the user; and
The display module 830 is configured to display the target gift model in a target spatial position area corresponding to the target display image layer.

The model display apparatus based on a virtual reality space provided in this embodiment of the present disclosure may perform the model display method based on a virtual reality space provided in any embodiment of the present disclosure, and has corresponding functional modules and beneficial effects of the method. The implementation principles are similar, and details are not described herein again.

To implement the foregoing embodiments, the present disclosure further provides a computer program product, comprising a computer program/instructions, where the computer program/instructions, when executed by a processor, implement the model display method based on a virtual reality space in the foregoing embodiments.

FIG. 13 is a schematic diagram of a structure of an electronic device according to some embodiments of the present disclosure.

Reference is made to FIG. 13 below, which shows a schematic diagram of a structure of an electronic device 1300 suitable for implementing the embodiments of the present disclosure. The electronic device 1300 in the embodiments of the present disclosure may comprise, but is not limited to, mobile terminals such as a mobile phone, a notebook computer, a digital broadcast receiver, a personal digital assistant (PDA), a tablet computer (PAD), a portable multimedia player (PMP), and a vehicle-mounted terminal (such as a vehicle navigation terminal), and fixed terminals such as a digital TV and a desktop computer. The electronic device 1300 shown in FIG. 9 is merely an example, and shall not impose any limitation on the function and scope of use of the embodiments of the present disclosure.

As shown in FIG. 13, the electronic device 1300 may comprise a processor (for example, a central processing unit, a graphics processing unit, etc.) 1301 that may perform a variety of appropriate actions and processing in accordance with a program stored in a read-only memory (ROM) 1302 or a program loaded from a memory 908 into a random access memory (RAM) 1303. The RAM 1303 further stores various programs and data required for the operation of the electronic device 1300. The processor 1301, the ROM 1302, and the RAM 1303 are connected to each other through a bus 1304. An input/output (I/O) interface 1305 is also connected to the bus 1304.

Generally, the following apparatuses may be connected to the I/O interface 1305: an input apparatus 906 comprising, for example, a touch screen, a touchpad, a keyboard, a mouse, a camera, a microphone, an accelerometer, and a gyroscope; an output apparatus 907 comprising, for example, a liquid crystal display (LCD), a speaker, and a vibrator; the memory 1308 comprising, for example, a tape and a hard disk; and a communication apparatus 1309. The communication apparatus 1309 may allow the electronic device 1300 to perform wireless or wired communication with other devices to exchange data. Although FIG. 13 shows the electronic device 1300 having various apparatuses, it should be understood that it is not required to implement or have all of the shown apparatuses. It may be an alternative to implement or have more or fewer apparatuses.

For example, according to some embodiments of the present disclosure, the process described above with reference to the flowcharts may be implemented as a computer software program. For example, this embodiment of the present disclosure comprises a computer program product, which comprises a computer program carried on a non-transitory computer-readable medium, where the computer program comprises program code for performing the method shown in the flowchart. In such an embodiment, the computer program may be downloaded and installed from a network through the communication apparatus 1309, or installed from the memory 1308, or installed from the ROM 1302. When the computer program is executed by the processor 1301, the above-mentioned functions defined in the model display method based on a virtual reality space in the embodiments of the present disclosure are performed.

In a virtual live streaming scenario, a style of presenting a virtual gift is relatively single. Generally, an audience selects a virtual gift in a gift panel by launching a cursor ray, and then touches a trigger key of a handle to send the virtual gift to an anchor, lacking a certain interactive interest.

The present disclosure provides a human-computer interaction method and apparatus, a device, and a storage medium, to implement diversified interaction of a user with a virtual gift in a virtual space, enhance interest of gift interaction in the virtual space, and mobilize enthusiasm for live streaming in the virtual space.

To solve the problem of lacking a certain interactive interest when a gift is sent to an anchor in a virtual space through a handle cursor, the inventive concept of the present disclosure is: In response to a trigger operation of a gift entrance in a virtual space, present a close gift panel beside a user in the virtual space, to support the user to perform a related sending operation on any virtual gift in the close gift panel through a hand model. Therefore, in response to a sending operation of the hand model for any virtual gift, a sending effect of the virtual gift may be presented in the virtual space, thereby increasing interactive operations of the user when the user sends the virtual gift in the virtual space, implementing diversified interaction of the virtual gift in the virtual space, and enhancing interactive interest of the virtual gift and an interactive atmosphere of the user in the virtual space.

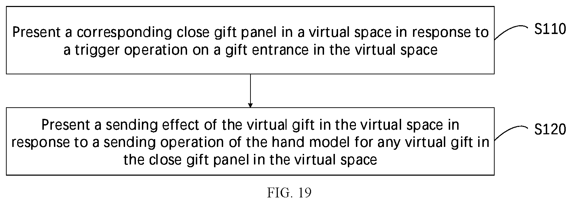

FIG. 19 is a flowchart of a human-computer interaction method according to some embodiments of the present disclosure. The method may be applied to an XR device, but is not limited thereto. The method may be performed by a human-computer interaction apparatus provided in the present disclosure. The human-computer interaction apparatus may be implemented in any software and/or hardware manner. For example, the human-computer interaction apparatus may be configured in an electronic device such as an AR/VR/MR device that can simulate a virtual scene, and the present disclosure does not impose any limitation on a specific type of the electronic device.

For example, as shown in FIG. 19, the method may comprise the following steps:
S110: Present a corresponding close gift panel in a virtual space in response to a trigger operation on a gift entrance in the virtual space.

In some embodiments, the virtual space may be a corresponding virtual environment simulated by an XR device for a selected live streaming scenario of any user, so that corresponding live interactive information can be displayed in the virtual space. For example, an streamer is supported to select a certain type of live streaming scenario to construct a corresponding virtual live streaming environment as the virtual space in the present disclosure, so that each audience can enter the virtual space to implement corresponding live interaction.

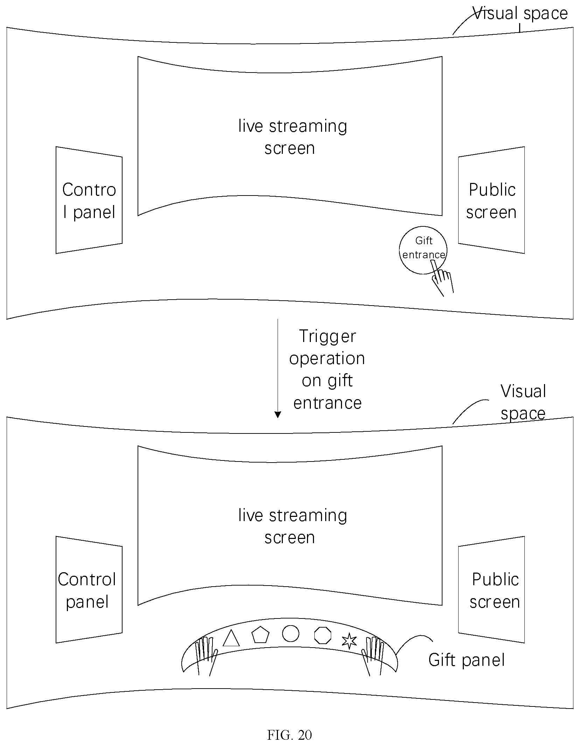

In the virtual space, a plurality of virtual screens such as a live streaming screen, a control screen, and a public screen may be respectively set for different live streaming functions, to display different live streaming content respectively. As shown in FIG. 20, a live video stream at a streamer end may be displayed in the live streaming screen, so that a user can watch a corresponding live picture. Information such as streamer information, online audience information, a related live streaming recommendation list, and a current live streaming definition option may be displayed in the control screen, to facilitate the user to perform related live streaming operations. Information such as various user comment information, likes, and gift sending in the current live streaming may be displayed in the public screen, so that the user can perform related management on the current live streaming.

It should be understood that the live streaming screen, the control screen, and the public screen all face to the user and displayed at different positions in the virtual space. In addition, a position and a style of any virtual screen may be adjusted to avoid occlusion of other virtual screens.

Generally, for diversified interaction of a virtual gift between a user and an streamer in the virtual space, as shown in FIG. 20, a corresponding gift entrance is displayed in the virtual space. In response to a user wanting to send a virtual gift to the streamer, the user first triggers the gift entrance, for example, selects the gift entrance by using a handle cursor, or clicks the gift entrance by controlling a hand model.

Therefore, to increase interactive operations of the user when the user sends the virtual gift in the virtual space, and to avoid single interaction when the gift is sent by using a cursor ray and a trigger key, after detecting the trigger operation of the gift entrance, the present disclosure presents a close gift panel beside the user in the virtual space. In addition, a corresponding hand model is also displayed in the virtual space to control the hand model to perform a corresponding interactive operation on any virtual object in the virtual space.

The close gift panel is beside the user, that is, within a reach of a hand model of the user, to support the user to directly perform a related sending operation at a close distance on any virtual gift in the close gift panel by using a real handle operation or a gesture operation in the virtual space, without the need to perform a related sending operation at a long distance by using the cursor ray. For example, the hand model performs a series of interactive operations such as touching, grasping, throwing, launching, and returning to the panel on any virtual gift.

In some embodiments, the close gift panel may be presented at a predetermined position in the virtual reality space. The predetermined position is at a distance from the user that meets a predetermined distance requirement, so that the close gift panel is beside the user, that is, within a reach of a hand model of the user, to support the user to perform the operation by using a real handle operation or a gesture operation.

For example, the close gift panel in the present disclosure may be horizontally presented around the user, and is approximately located at a position a small distance in front of the user, for example, at a position 40 cm to 45 cm away from the user, and a horizontal position is approximately flush with an elbow of the user.

It should be understood that in response to there being a corresponding user interface (UI) control in the close gift panel, the user is also supported to perform a related interactive operation on any UI control through the hand model. For example, the hand model may perform a series of interactive operations such as touching, clicking, pressing, and lifting on any UI control. The UI control may be used to perform a related panel operation on the close gift panel, for example, panel paging or panel retraction.

In addition, considering that an overall size of the close gift panel is limited, and a quantity of virtual gifts displayed in the close gift panel may be large. Therefore, to display more and more comprehensive virtual gifts in the close gift panel, the present disclosure may set a corresponding paging function for the close gift panel. Paging operations supported by the close gift panel may comprise but are not limited to the following three cases.

Case 1: A dragging and page turning operation of the hand model for the close gift panel.

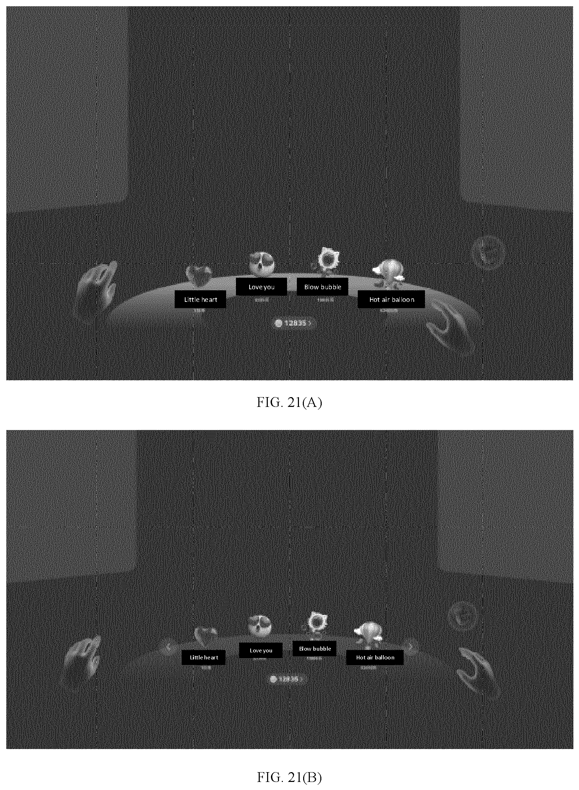

As shown in FIG. 21(A), considering that the hand model is beside the user, for example, the hand model may be presented around the user. Therefore, the present disclosure may select the close gift panel by touching the close gift panel through the hand model. In response to touching the close gift panel, the hand model may control the close gift panel to be highlighted, and control a real handle in the XR device to vibrate, to prompt the user that the close gift panel has been selected. Then, the user may control the hand model to perform dragging and page turning on the close gift panel by operating a grip button in the real handle and performing a corresponding dragging motion, to generate the dragging and page turning operation of the close gift panel.

Case 2: A trigger operation of the hand model for a paging control in the close gift panel.

As shown in FIG. 21(B), the present disclosure may set a corresponding paging control in the close gift panel, and the paging control may comprise two controls: a previous page control and a next page control. The user clicks the paging control in the close gift panel through the hand model, to generate the trigger operation on the paging control as a paging operation of the close gift panel.

Case 3: A toggle operation of the hand model for a rocker assembly in the handle model.

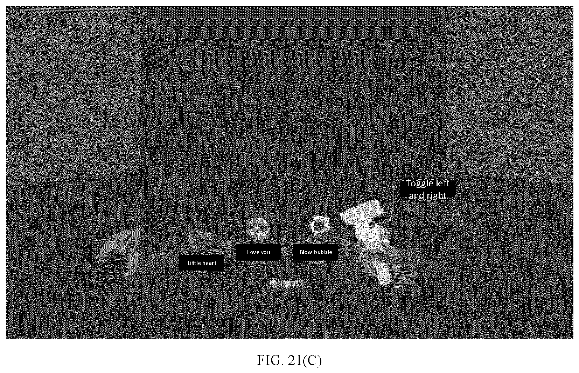

To ensure diversified interaction of the user with any virtual object in the virtual space, in addition to displaying the corresponding hand model in the virtual space, the present disclosure further displays a corresponding handle model. Then, different interactive operations are performed in the virtual space based on different features of the hand model and the handle model. As shown in FIG. 21(C), the user holds the handle model through the hand model, and then toggles the rocker assembly in the handle model left and right, to generate a paging operation of the close gift panel.

It can be learned from the foregoing content that in response to more virtual gifts being presented in the close gift panel, the user may perform one of the foregoing paging operations on the close gift panel through the hand model, to generate the paging operation of the close gift panel. Then, in response to the paging operation of the close gift panel, the close gift panel may be controlled to page, that is, a paging effect of the close gift panel is displayed in the virtual space. In addition, with the paging of the close gift panel, a new virtual gift may be presented in the close gift panel, and some presented virtual gifts may be retracted.

S120: Present a sending effect of the virtual gift in the virtual space in response to a sending operation of the hand model for any virtual gift in the close gift panel in the virtual space.

According to the technical solution of the present disclosure, in response to a trigger operation of a gift entrance in a virtual space, a corresponding close gift panel may be presented in the virtual space, the close gift panel is beside a user, and the user is supported to perform a related sending operation on any virtual gift in the close gift panel through a hand model. Therefore, in response to a sending operation of the hand model for any virtual gift, a sending effect of the virtual gift may be presented in the virtual space, without the need to select a virtual gift by using a cursor ray and then present a corresponding gift sending effect by using a trigger button of a handle, thereby increasing interactive operations of the user when the user sends the virtual gift in the virtual space, implementing diversified interaction of the virtual gift in the virtual space, and enhancing interactive interest of the virtual gift and an interactive atmosphere of the user in the virtual space, and mobilizing enthusiasm for live streaming of the user in the virtual space.

After the close gift panel is presented in the virtual space, some related motions close to any virtual gift in the close gift panel may be performed by controlling the hand model through a real handle operation or a gesture operation, to select any virtual gift to perform various motions indicating gift sending, thereby simulating an actual gift sending process, and enhancing diversified interaction of gift sending in the virtual space.

Therefore, the present disclosure may detect various motion information of the hand model for any virtual gift in real time, to determine whether the user performs a corresponding sending operation on the virtual gift through the hand model. After detecting the sending operation of the hand model for any virtual gift, it indicates that the user currently needs to send the virtual gift to an steamer. Therefore, the present disclosure may present a sending effect of the virtual gift in the virtual space. The sending effect may be a throwing effect of throwing the virtual gift into the virtual space through the hand model, or may be a prop sending effect of sending the virtual gift into the virtual space through a gift sending prop. This is not limited in the present disclosure.

In addition, in response to the sending effect of the virtual gift being presented in the virtual space, considering that the virtual gift is thrown and sent in a three-dimensional space and there is a corresponding spatial throwing trajectory, the sending effect of the virtual gift may comprise but is not limited to: the spatial throwing trajectory of the virtual gift in the virtual space, and a throwing effect set based on the spatial throwing trajectory or/and the virtual gift. The throwing effect may be an animation effect displayed at a final landing place after the virtual gift is thrown in the virtual space.

In some embodiments, considering that the user faces to a live streaming screen in the virtual space to watch a live video stream of an steamer, there is usually a corresponding visible area and a blind area. Some virtual objects, for example, a control screen, a public screen, a gift panel, etc., may further exist in the virtual space, and the viewing sight line of the user for the live video stream may further be blocked. In addition, for a gift sending effect in the virtual space, the gift sending effect usually needs to be presented between the user and the live video stream of the steamer (namely, the live streaming screen), so that the user can watch the gift sending effect, to determine whether the virtual gift is successfully sent. If a virtual gift is sent in the virtual space but the user cannot watch the sending effect of the virtual gift, interaction of the virtual gift between the user and the steamer cannot be ensured.

Therefore, to ensure that the user can watch an interactive effect presented after any virtual gift is sent in the virtual space, the present disclosure may pre-determine a gift sending security area in the virtual space according to a position of the user in the virtual space and a position of the live streaming screen, so that for a virtual gift that lands in the gift sending security area after being thrown, it can be ensured that the user can watch a corresponding sending effect.

Then, in response to the sending effect of the virtual gift being presented in the virtual space, it is first required to determine the gift sending security area set in the virtual space. Then, the sending effect of the virtual gift is presented in the virtual space based on the gift sending security area.

In other words, whether a throwing position of the virtual gift in the virtual space is located in the gift sending security area is determined, to determine whether this gift sending can be successfully performed. Furthermore, in response to it being determined that the virtual gift can be thrown into the gift sending security area in the virtual space, it indicates that this gift sending can be successfully performed, and the sending effect of the virtual gift may be presented in the virtual space.

In addition, according to different live streaming function features in the virtual space, there are different function areas such as the close gift panel, the gift sending security area, and a live streaming content display area. The live streaming content display area is used to display various types of live streaming-related content, for example, a live video stream, a live comment, a live streaming list, and steamer information. That is, the live streaming content display area may be an area where the virtual screens such as the live streaming screen, the public screen, and the control screen mentioned above are located.

Therefore, to ensure that information of different function areas of the user in the virtual space is not blocked from each other, the present disclosure may set the live streaming content display area, the gift sending security area, and the close gift panel in the virtual space to be located in different spatial planes. In addition, a corresponding distance interval and a corresponding area size may be respectively set for the live streaming content display area, the gift sending security area, and the close gift panel. Then, the live streaming content display area, the gift sending security area, and the close gift panel are sequentially distributed in the virtual space according to a preset distance and an area size, so that the live streaming content display area, the gift sending security area, and the close gift panel can be located in the virtual space independently of each other and without affecting each other. In addition, to ensure interactive interest of gift sending in the virtual space, when the user interacts with any virtual object in the virtual space through the hand model, the present disclosure may control an XR device to perform vibration of different degrees according to different interactive operations performed by the hand model for the virtual object. For example, in response to the hand model hovering over a certain virtual object, the XR device (for example, a real handle) is controlled to perform slight vibration. In response to the hand model clicking the virtual object, the XR device may be controlled to perform relatively strong vibration. The virtual object that interacts with the hand model may be the gift entrance, the close gift panel, each virtual gift in the close gift panel, a related user interaction control, or the like.

For example, for any virtual gift in the close gift panel, in response to the hand model hovering over the virtual gift, the XR device may be controlled to perform slight vibration, and in response to the hand model holding the virtual gift, the XR device may be controlled to perform relatively strong vibration.

According to the technical solution provided in the embodiments of the present disclosure, in response to a trigger operation on a gift entrance in a virtual space, a corresponding close gift panel may be presented in the virtual space, the close gift panel is beside a user, and the user is supported to perform a related sending operation on any virtual gift in the close gift panel through a hand model. Therefore, in response to a sending operation of the hand model for any virtual gift, a sending effect of the virtual gift may be presented in the virtual space, without the need to select a virtual gift by using a cursor ray and then present a corresponding gift sending effect by using a trigger button of a handle, thereby increasing interactive operations of the user when the user sends the virtual gift in the virtual space, implementing diversified interaction of the virtual gift in the virtual space, and enhancing interactive interest of the virtual gift and an interactive atmosphere of the user in the virtual space, and mobilizing enthusiasm for live streaming of the user in the virtual space.

In some embodiments, to ensure diversified triggering of presentation of the close gift panel in the virtual space, the present disclosure may set a far gift entrance in the virtual space, and the far gift entrance may be located in any virtual screen in the virtual space, for example, the far gift entrance may be located at a certain position in the public screen. In this case, the far gift entrance is far away from the user, and can support a trigger interaction at a long distance by using a cursor ray.

Alternatively, a close gift entrance may be set in the virtual space, and the close gift entrance may be located at a close position of the user in the virtual space, for example, the close gift entrance may be located at a small distance in front of the right of the user, for example, about 70 cm, and the close gift entrance may be leveled with an elbow of the user, so that it is within a reach of the hand model. In this case, the close gift entrance is close to the user, and can support a trigger interaction at a close distance by using the hand model.

For example, a process of presenting the close gift panel in the virtual space in the two cases of the far gift entrance and the close gift entrance is described respectively.

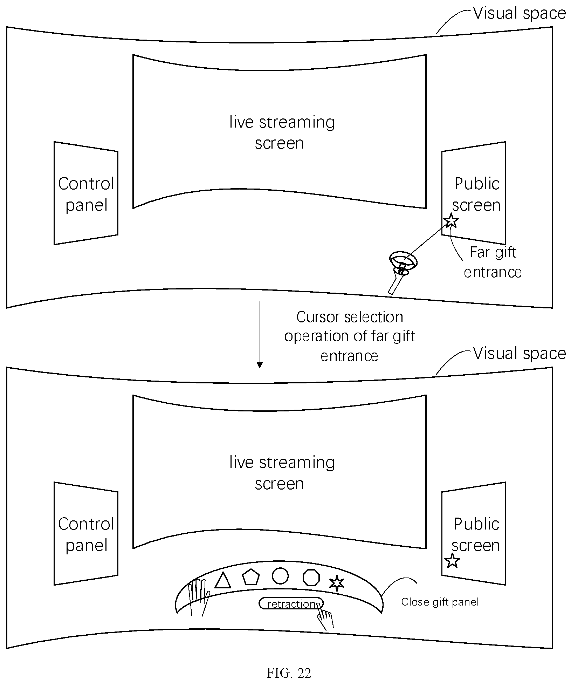

The following first describes the process of presenting the close gift panel in the virtual space by triggering the far gift entrance:
For the far gift entrance set on any virtual screen in the virtual space, as shown in FIG. 22, a corresponding cursor ray may be emitted to the far gift entrance through the handle model or the hand model. In this way, the far gift entrance is selected by using the cursor ray, and then a trigger button in the real handle is touched to confirm that the far gift entrance is selected, to generate a cursor selection operation of the far gift entrance. Furthermore, a corresponding close gift panel is presented in the virtual space in response to the cursor selection operation of the far gift entrance. In other words, after detecting the cursor selection operation acting on the far gift entrance, it shows that there is currently sending interaction of a virtual gift between the user and an steamer in the virtual space, so that a close gift panel beside the user may be presented in the virtual space, so that a corresponding sending operation can be performed on any virtual gift in the close gift panel through the hand model.

Then, after a sending process of any virtual gift in the close gift panel is completed and gift interaction is no longer required to be performed, the present disclosure needs to retract the presented close gift panel in the virtual space. Therefore, to ensure convenient retraction of the close gift panel, and the close gift panel is presented by triggering the far gift entrance, the present disclosure may set a retraction control in the close gift panel. As shown in FIG. 22, the user clicks the retraction control in the close gift panel through the hand model, indicating that the presented close gift panel needs to be retracted from the virtual space.

Therefore, in a process of presenting the close gift panel, the present disclosure detects a trigger operation performed by the hand model for the retraction control in the close gift panel in real time. In response to the trigger operation of the hand model for the retraction control, the presented close gift panel may be retracted in the virtual space.

In addition, to ensure diversified interaction of the close gift panel in response to the close gift panel being presented and retracted, the present disclosure may further play a far presentation effect or a far retraction effect of the close gift panel in the virtual space in response to the close gift panel being presented or retracted in the virtual space by triggering the far gift entrance. The far presentation effect may be a corresponding far presentation animation and/or sound effect, and the far retraction effect may be a far retraction animation and/or sound effect opposite to the far presentation effect.

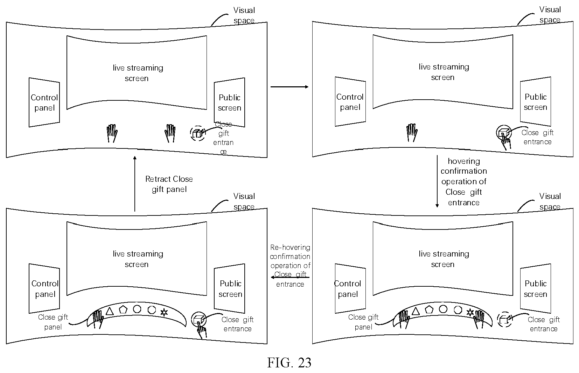

The following describes the process of presenting the close gift panel in the virtual space by triggering the close gift entrance:
For the close gift entrance set at a close position of the user in the virtual space, as shown in FIG. 23, in response to the user just entering the virtual space, the close gift entrance is in a first ghost state by default, and the first ghost state may be a ghost style indicating that the close gift panel is not presented, to avoid blocking the user from watching live content of an steamer.

In response to there being a gift interaction requirement in the virtual space, because the close gift entrance is at a close position of the user and within a reach of the hand model, the present disclosure may control the hand model to hover over the close gift entrance to activate the close gift entrance. As shown in FIG. 23, in response to a hovering operation of the hand model for the close gift entrance, the close gift entrance may be controlled to switch from the first ghost state to an activated state. For example, the close gift entrance may emit light and zoom in the activated state, so that an icon of the close gift entrance may change from a ghost to a solid. In addition, the present disclosure may further control a real handle of the XR device to vibrate accordingly.

Then, the user touches a trigger button in the real handle to confirm that the close gift entrance is selected through the hand model, to generate a hovering confirmation operation of the hand model for the close gift entrance. Furthermore, a corresponding close gift panel may be presented in the virtual space in response to the hovering confirmation operation of the hand model for the close gift entrance. In other words, after detecting the hovering confirmation operation of the hand model for the close gift entrance, it indicates that there is currently sending interaction of a virtual gift between the user and an steamer in the virtual space, so that a close gift panel beside the user may be presented in the virtual space, so that a corresponding sending operation can be performed on any virtual gift in the close gift panel through the hand model.

In addition, after the close gift panel is presented in the virtual space, to avoid the close gift entrance affecting the user to send any virtual gift in the close gift panel in the activated state, as shown in FIG. 23, the present disclosure may further control the close gift entrance to further switch from the activated state to a second ghost state. The second ghost state may be to change an icon of the close gift entrance to a ghost style indicating that the close gift panel has been presented. For example, assuming that the icon of the close gift entrance is represented by a virtual gift box, the first ghost state may be a closed virtual gift box, and the second ghost state may be an opened virtual gift box.

After a sending process of any virtual gift in the close gift panel is completed and gift interaction is no longer required to be performed, the present disclosure needs to retract the presented close gift panel in the virtual space. Therefore, to ensure convenient retraction of the close gift panel, and the close gift panel is presented by triggering the close gift entrance located at a close position of the user, the present disclosure may trigger the close gift entrance again through the hand model to indicate to retract the presented close gift panel in the virtual space.

As shown in FIG. 23, the hand model hovers over the close gift entrance in the second ghost state again to activate the close gift entrance again. For example, the close gift entrance emits light and zooms again, so that the icon of the close gift entrance may continue to change from a ghost to a solid. In addition, the present disclosure may still control the real handle of the XR device to vibrate accordingly.

Then, the user touches a trigger button in the real handle to confirm that the close gift entrance is selected again through the hand model, to generate a re-hovering confirmation operation of the hand model for the close gift entrance. Furthermore, the presented close gift panel may be retracted in the virtual space in response to the re-hovering confirmation operation of the hand model for the close gift entrance.

In addition, after the close gift panel is retracted in the virtual space, the close gift entrance may be controlled to switch back to the first ghost state, so that the close gift panel can be presented again later.

In addition, to ensure diversified interaction of the close gift panel in response to the close gift panel being presented and retracted, the present disclosure may further play a close presentation effect or a close retraction effect of the close gift panel in the virtual space in response to the close gift panel being presented or retracted in the virtual space by triggering the close gift entrance. The close presentation effect may be a corresponding close presentation animation and/or sound effect, and the close retraction effect may be a close retraction animation and/or sound effect opposite to the close presentation effect.

For example, assuming that the icon of the close gift entrance is a virtual gift box, the close presentation effect may be that after the virtual gift box is triggered by the hand model, the virtual gift box changes from a ghost to a solid and is opened, and a light beam flies out of the virtual gift box. Then, the light beam that flies out of the virtual gift box may gradually aggregate into a shape of the close gift panel beside the user, and then each virtual gift is gradually displayed. Furthermore, after the close presentation effect is played, the close gift panel may be stably presented beside the user, and the corresponding virtual gift is displayed on the close gift panel. In addition, the virtual gift box may be kept in an opened style and gradually changes from a solid to a ghost.

In response to the close gift panel being retracted, the opened virtual gift box is triggered again by the hand model, so that the virtual gift box emits light and zooms again, and gradually changes from a ghost to a solid. Then, the close gift panel is controlled to change into a light beam and fly back into the virtual gift box from beside the user, and the virtual gift disappears gradually along with the close gift panel. Furthermore, after the light beam flies back into the virtual gift box, the virtual gift box is controlled to be closed, and gradually changes from a solid to a ghost, and switches back to the default first ghost state.

According to one or more embodiments of the present disclosure, to ensure convenient use of the user when sending any virtual gift in the close gift panel, the present disclosure may set an experience mode for the close gift panel, to guide the user to perform a complete gift sending process for a virtual gift in the close gift panel in the experience mode in response to the close gift panel being presented in the virtual space, thereby enhancing the user's understanding of the close gift panel.

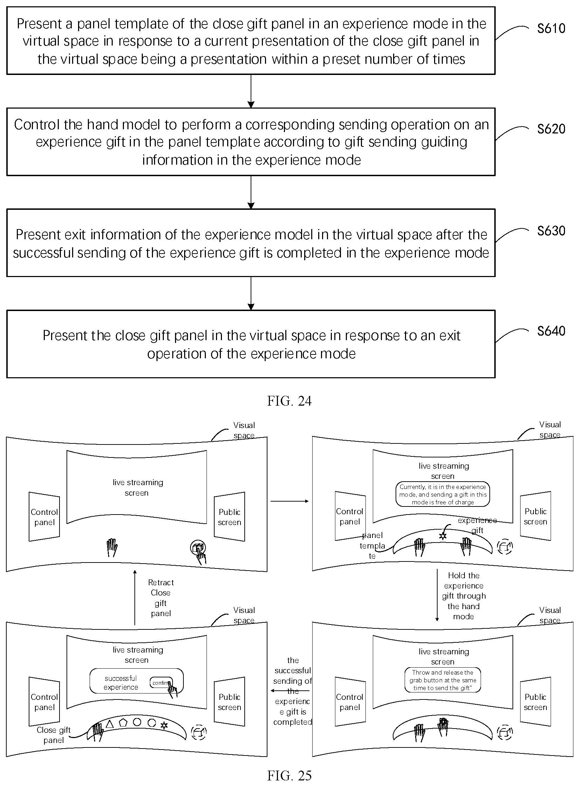

As shown in FIG. 24, a process of presenting the close gift panel in the virtual space may comprise the following steps.

S610: Present a panel template of the close gift panel in an experience mode in the virtual space in response to a current presentation of the close gift panel in the virtual space being a presentation within a preset number of times.

Considering that if the close gift panel is presented in the virtual space for the first several times (for example, the first two times), the user may not know about a gift sending function of the close gift panel, and the user needs to be guided to perform a complete gift sending process in the experience mode to enhance the user's understanding of the close gift panel. However, if the close gift panel is presented again later (for example, starting from the third presentation of the close gift panel), the user does not need to be guided to perform the complete gift sending process in the experience mode.

Therefore, the present disclosure may set a number limit for a presentation number of times of the close gift panel according to a guiding requirement of the close gift panel in the experience mode, that is, the preset number of times in the present disclosure. For example, the preset number of times may be two, which is not limited in the present disclosure. Each time the close gift panel is presented in the virtual space, a corresponding presentation number of times is recorded, to determine whether the current presentation of the close gift panel is a presentation within the preset number of times, to determine whether it is necessary to guide the user to experience a gift sending process once.

If the current presentation of the close gift panel in the virtual space is a presentation within the preset number of times, it indicates that this presentation needs to guide the user to experience a complete gift sending process once, so that the user can accurately understand a gift sending function supported by the close gift panel. Then, the panel template of the close gift panel in the experience mode may be first presented in the virtual space, to allow the user to enter the experience mode.

As shown in FIG. 25, the panel template has a same style as the close gift panel, and both are presented beside the user. However, considering that a main purpose of the panel template is to guide the user to perform a complete gift sending process, and there is no limitation on a virtual gift to be sent. Therefore, there may be one or a small quantity of virtual gifts in the panel template as corresponding experience gifts, and all virtual gifts are not presented as in the close gift panel.

It should be understood that the gift sending process performed by the user in the experience mode is not a real gift sending performed by the user. Therefore, in the experience mode, a charging display and a deduction entry of the experience gift are cancelled, so that in response to the user performing the gift sending process in the experience mode, a corresponding deduction operation is not performed.

S620: Control the hand model to perform a corresponding sending operation on an experience gift in the panel template according to gift sending guiding information in the experience mode.

Because there are a plurality of gift sending steps in a complete gift sending process, the present disclosure presents corresponding gift sending guiding information for each sending operation performed by the user in the experience mode. Then, a corresponding sending operation may be performed on the experience gift in the panel template by controlling the hand model according to the gift sending guiding information for each step. After this sending operation is completed, gift sending guiding information for a next step is continuously presented, and the hand model is continuously controlled to perform a corresponding sending operation. The foregoing operations are performed circularly, to support the user to perform a complete gift sending process once in the experience mode.

As an example solution in the present disclosure, as shown in FIG. 25, in response to the user just entering the experience mode, a piece of gift sending guiding information "Currently, it is in the experience mode, and sending a gift in this mode is free of charge" is first presented, to prompt the user that the gift sending in the experience mode is not charged. This piece of gift sending guiding information automatically disappears after being presented for three seconds. Then, if the user still has not performed a current related gift sending operation after the previous piece of guiding information disappears for a corresponding period of time, a piece of guiding information indicating to perform the current related gift sending operation may be continuously presented in the virtual space. The gift sending guiding information may be text guiding or virtual animation guiding. This is not limited in the present disclosure.

Five seconds after the first-presented piece of gift sending guiding information disappears, the user still has not held the experience gift in the panel template through the hand model, a virtual guiding animation of holding the experience gift through the hand model is presented, or a flexible line is displayed beside the experience gift and connected to a piece of guiding text, and the guiding text may be "Touch and hold the gift by using a grab button". After the experience gift is held through the hand model, if the experience gift is not thrown in the virtual space for more than seven seconds, a virtual guiding animation of throwing the experience gift through the hand model is continuously presented, or a flexible line is displayed beside the experience gift and connected to a piece of guiding text, and the guiding text may be "Throw and release the grab button at the same time to send the gift". The held experience gift is thrown in the virtual space through the hand model according to the foregoing virtual guiding animation or guiding text, indicating that a gift sending process is completed.

S630: Present exit information of the experience model in the virtual space after the successful sending of the experience gift is completed in the experience mode.

After the successful sending of the experience gift is completed once in the experience mode, as shown in FIG. 25, a pop-up window of successful experience is presented in the virtual space, and a confirmation control for successful experience of gift sending may be set in the pop-up window of successful experience. The confirmation control is triggered through the hand model, to exit the experience mode.

S640: Present the close gift panel in the virtual space in response to an exit operation of the experience mode.

In response to a trigger operation of the hand model acting on the confirmation control in the pop-up window of successful experience being detected, the exit operation of the experience mode may be generated. Then, in response to the exit operation of the experience mode, presentation of the panel template is cancelled in the virtual space, the close gift panel is presented in the virtual space, and a corresponding deduction entry is displayed, to perform a corresponding gift sending operation.

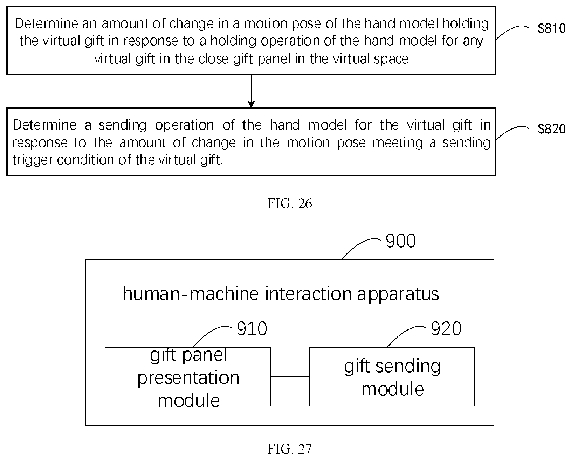

In some embodiments, for a sending operation of a hand model for any virtual gift in a close gift panel in a virtual space, as shown in FIG. 26, the present disclosure may describe a process of sending any virtual gift through the hand model in the virtual space by using the following steps.

S810: Determine an amount of change in a motion pose of the hand model holding the virtual gift in response to a holding operation of the hand model for any virtual gift in the close gift panel in the virtual space.

In some embodiments, to increase interactive operations of the user when the user sends the virtual gift in the virtual space, and to avoid single interaction when the gift is sent by using a cursor ray and a trigger button, the user may control a hand model simulated in the virtual space to perform a corresponding motion through a handle operation, a gesture operation, or the like, to perform a corresponding holding operation on any virtual gift in the close gift panel.

Then, to enhance an interactive atmosphere of the user when the gift is sent in the virtual space, it is required that after the hand model holds any virtual gift, the hand model can perform various motions indicating gift sending in the virtual space, to simulate an actual gift sending process, and enhance diversified interaction of gift sending in the virtual space.

Therefore, in response to the holding operation of the hand model for any virtual gift, the user may be supported to input some motion information corresponding to a motion performed by the hand model in an XR device, for example, operating each direction button on a handle to control the handle to perform a corresponding motion, or controlling a hand to perform a corresponding motion gesture, which may all indicate a motion that needs to be performed by the hand model after holding any virtual gift. According to this motion information, a motion instruction initiated by the user for the hand model may be generated.

Furthermore, by analyzing the motion instruction initiated by the user for the hand model, various motion information that actually needs to be performed after the hand model holds the virtual gift may be determined, to control the hand model to hold the virtual gift and perform a corresponding motion in the virtual space. In addition, in an actual motion process of the hand model in the virtual space, the present disclosure further needs to determine the amount of change in the motion pose of the hand model after holding the virtual gift in real time, to determine whether the amount of change in the motion pose meets a sending trigger condition of the held virtual gift.

S820: Determine a sending operation of the hand model for the virtual gift in response to the amount of change in the motion pose meeting a sending trigger condition of the virtual gift.

To ensure accurate sending of the virtual gift in the virtual space, the present disclosure may set a sending trigger condition for the virtual gift in advance for an actual sending operation of any virtual gift.

In the present disclosure, virtual gifts in the virtual space may be divided into two types: throwable gifts and non-throwable gifts, to enhance diversity of gift sending in the virtual space. The throwable gifts may comprise some virtual gifts that can be successfully sent to an steamer by the hand model through direct throwing in the virtual space, for example, an individual expression gift, a heart-shaped gift, etc. The non-throwable gifts may comprise some other virtual gifts that are stored in a corresponding gift sending prop and need to be successfully sent to the anchor by the hand model through performing a corresponding interaction operation with the held gift sending prop, for example, a bubble gift sent through a bubble stick, a hot air balloon gift activated through a heating device, etc.

In some embodiments, for the throwable gifts in the virtual gifts, a sending trigger condition of the throwable gifts may be set as follows: The hand model is in a holding cancellation pose after performing a throwing motion or a consecutive throwing motion. In other words, whether the hand model has performed the throwing motion or the consecutive throwing motion is determined by using the amount of change in the motion pose performed by the hand model after holding the throwable gifts. In addition, after the foregoing motion is performed, whether the hand model cancels the holding of the throwable gifts to be finally in the holding cancellation pose is determined. If the sending trigger condition of the throwable gifts is met, it indicates that the held virtual gift is thrown in the virtual space through the hand model, that is, it indicates that the throwable gifts need to be sent to the steamer in the virtual space.

Further, for the non-throwable gifts in the virtual gifts, a sending trigger condition of the non-throwable gifts may be set as follows: A target part of the hand model that interacts with the gift sending prop performs a gift sending operation set for the gift sending prop. It is presented that the hand model holds a gift sending prop used to store the non-throwable gifts in response to holding the non-throwable gifts. For example, for the bubble gift sent through the bubble stick, the bubble stick is held from the close gift panel through the hand model to send a corresponding bubble gift. Then, whether the target part of the hand model that interacts with the gift sending prop performs the gift sending operation set for the gift sending prop is determined by using the amount of change in the motion pose performed by the hand model after holding the non-throwable gifts. If the sending trigger condition of the non-throwable gifts is met, it indicates that the non-throwable gifts in the gift sending prop can be sent in the virtual space through the corresponding interaction between the target part in the hand model and the gift sending prop, that is, it indicates that the non-throwable gifts need to be sent to the steamer in the virtual space.

In some embodiments, after determining the amount of change in the motion pose performed by the hand model after holding the virtual gift, the present disclosure first determines the sending trigger condition of the held virtual gift. Then, whether the virtual gift needs to be sent to the steamer in the virtual space is determined by determining whether the amount of change in the motion pose performed by the hand model after holding the virtual gift meets the sending trigger condition of the virtual gift. In response to the amount of change in the motion pose meeting the sending trigger condition of the held virtual gift, it indicates that the user indicates to send the virtual gift to the steamer, and a sending operation of the hand model for the virtual gift is determined accordingly.

A sending effect of the virtual gift may be subsequently presented in the virtual space in response to the sending operation of the hand model for the virtual gift.

It should be noted that when the corresponding virtual gift is sent to the steamer in the virtual space through the hand model, one sending operation or consecutive sending operations may be performed, so that there are different sending types of the virtual gift. Therefore, when presenting the sending effect of the virtual gift in the virtual space, the present disclosure further determines whether the motion performed by the hand model is one sending or consecutive sending based on the amount of change in the motion pose of the hand model after holding the virtual gift, to determine a sending type of the virtual gift. Then, a sending effect corresponding to the sending type of the virtual gift may be presented in the virtual space.

In addition, after any virtual gift is held by the hand model and driven to perform the corresponding motion in the virtual space, the user may actively give up sending the virtual gift to the steamer. In this case, when the held virtual gift has not been sent to the steamer, the user gives up sending the virtual gift actively by canceling the holding of the virtual gift through the hand model. Therefore, the present disclosure may set a homing condition by determining whether the hand model cancels the holding of the virtual gift if the hand model does not perform a corresponding gift sending operation.

Furthermore, in response to determining the amount of change in the motion pose of the hand model holding the virtual gift, if the amount of change in the motion pose meets a homing condition of the virtual gift, the virtual gift is controlled to return, in the virtual space, to an original position of the virtual gift on the close gift panel from the hand model.

In other words, the present disclosure may determine whether the amount of change in the motion pose meets the homing condition of the virtual gift, to determine whether the user actively gives up sending the virtual gift. In response to the amount of change in the motion pose indicating that the hand model performs the holding cancellation operation but does not perform an operation of sending the virtual gift, it indicates that the amount of change in the motion pose meets the homing condition of the virtual gift. Therefore, in the virtual space, the virtual gift that is no longer held by the hand model may be controlled to return from a position of the hand model to the original position of the virtual gift on the gift panel.

In some embodiments, considering that the hand model cancels the holding of the virtual gift, there may be the following two cases: 1) The hand model directly cancels the holding of the virtual gift at any motion point after performing a corresponding motion, that is, the hand model performs the holding cancellation operation for the virtual gift at the any motion point after performing the corresponding motion. 2) The hand model drives the held virtual gift to perform the corresponding motion, and then cancels the holding of the virtual gift after returning to a position above an original position of the virtual gift on a gift panel, that is, the hand model drives the virtual gift to return to the position above the original position of the virtual gift on the gift panel from the any motion point, and then performs the holding cancellation operation for the virtual gift.

In the foregoing first case, the present disclosure may set a first homing condition, and the first homing condition may be: performing the holding cancellation operation at any motion point when the hand model holds the virtual gift. In other words, the hand model moves to the any motion point after holding the virtual gift, and performs the holding cancellation operation at the motion point. Therefore, in response to the amount of change in the motion pose of the hand model holding the virtual gift meeting the first homing condition, the present disclosure may control the virtual gift to return to the original position of the virtual gift on the gift panel after performing a preset vertical motion downward from the hand model.

In other words, to simulate an effect of gravity on the virtual gift after the virtual gift is released by the hand model, the virtual gift may be controlled to perform the preset vertical motion downward for a short period of time. A downward motion distance of the preset vertical motion may be determined based on a position height where the hand model cancels the holding of the virtual gift and a position height of the gift panel. Usually, the position height where the hand model cancels the holding of the virtual gift is greater than the position height of the gift panel. For example, assuming that the position height where the hand model cancels the holding of the virtual gift is A, and the position height of the gift panel is B, the downward motion distance of the preset vertical motion may be 0.2*(A-B). Then, after the virtual gift completes the preset vertical motion downward, the virtual gift is controlled to return to the original position of the virtual gift on the gift panel.

In the foregoing second case, the present disclosure may set a second homing condition, and the second homing condition may be: performing the holding cancellation operation after the hand model holds and moves the virtual gift to a position above the original position of the virtual gift on the gift panel. In other words, the hand model moves and then returns to the position above the original position of the virtual gift on the gift panel after holding the virtual gift, and performs the holding cancellation operation above the original position. Therefore, in response to the amount of change in the motion pose of the hand model holding the virtual gift meeting the second homing condition, the present disclosure may control the virtual gift to return to the original position of the virtual gift on the gift panel from a current position.

In other words, in response to the hand model driving the virtual gift to return to the position above the original position of the virtual gift on the gift panel, the virtual gift that is no longer held may be directly controlled to return to the original position of the virtual gift on the gift panel from the current position above the original position after the virtual gift is cancelled to be held.

In addition, in a case where any virtual gift is held through the hand model, to ensure effective interaction between the hand model and the virtual gift, the present disclosure sets a preset holding upper limit for a holding duration of the hand model holding the virtual gift. If the amount of change in the motion pose of the hand model holding the virtual gift still does not meet the sending trigger condition or the homing condition of the virtual gift and the holding duration of the hand model holding the virtual gift reaches the preset holding upper limit, a piece of sending guiding information of the virtual gift may be presented in the virtual space, and the sending guiding information is used to indicate a sending operation that needs to be performed when the virtual gift is sent in the virtual space through the hand model, to guide the user to control the hand model to accurately perform a corresponding sending operation on the held virtual gift.

FIG. 27 is a schematic diagram of a human-machine interaction apparatus according to some embodiments of the present disclosure. The human-machine interaction apparatus 900 may be configured in an XR device. The human-machine interaction apparatus 900 comprises:
a gift panel presentation module 910, configured to present a corresponding close gift panel in a virtual space in response to a trigger operation of a gift entrance in the virtual space; and
a gift sending module 920, configured to present a sending effect of a virtual gift in the virtual space in response to a sending operation of a hand model for any virtual gift in the close gift panel in the virtual space.

In some embodiments, the gift panel presentation module 910 may be configured to:
present the corresponding close gift panel in the virtual space in response to a cursor selection operation of a far gift entrance in the virtual space,
where the far gift entrance is located in any virtual screen in the virtual space.

In some embodiments, the virtual gift interaction apparatus 900 may further comprise:
a first retraction module, configured to retract the close gift panel in the virtual space in response to a trigger operation of the hand model for a retraction control in the close gift panel.

In some embodiments, the virtual gift interaction apparatus 900 may further comprise:
a far effect playing module, configured to play a far presentation effect or a far retraction effect of the close gift panel in the virtual space.

In some embodiments, the gift panel presentation module 910 may be further configured to:
present the corresponding close gift panel in the virtual space in response to a hovering confirmation operation of the hand model for a close gift entrance in the virtual space,
where the close gift entrance is located at a close position of the user in the virtual space, and is in a first ghost state by default.

In some embodiments, the virtual gift interaction apparatus 900 may further comprise:
a state switching module, configured to control the close gift entrance to switch from the ghost state to an activated state in response to a hovering operation of the hand model for the close gift entrance.

In some embodiments, the state switching module may be further configured to:
control the close gift entrance to switch from the activated state to a second ghost state.

In some embodiments, the virtual gift interaction apparatus 900 may further comprise:
a second retraction module, configured to retract the close gift panel in the virtual space in response to a re-hovering confirmation operation of the hand model for the close gift entrance.

In some embodiments, the virtual gift interaction apparatus 900 may further comprise:
a close effect playing module, configured to play a close presentation effect or a close retraction effect of the close gift panel in the virtual space.

In some embodiments, the state switching module may be further configured to:
control the close gift entrance to switch back to the first ghost state.

In some embodiments, the gift panel presentation module 910 may be further configured to:
present the corresponding close gift panel at a predetermined position in a virtual reality space, where a distance between the predetermined position and the user meets a predetermined distance requirement.

In some embodiments, the gift sending module 920 may be configured to:
determine a preset gift sending safety area in the virtual space; and
present the sending effect of the virtual gift in the virtual space according to the gift sending safety area.

In some embodiments, a live content display area, the gift sending safety area, and the close gift panel in the virtual space are located in different spatial planes and are sequentially distributed in the virtual space according to a preset distance and area size.

In some embodiments, the sending effect of the virtual gift comprises: a spatial throwing trajectory of the virtual gift in the virtual space, and a throwing effect set based on the spatial throwing trajectory or/and the virtual gift.

In some embodiments, a sending operation of a hand model for any virtual gift in a close gift panel in the virtual space is determined by a sending operation determination module. The sending operation determination module may be configured to:
determine an amount of change in a motion pose of the hand model when the hand model holds the virtual gift in response to a holding operation of the hand model for any virtual gift in the close gift panel in the virtual space; and
determine a sending operation of the hand model for the virtual gift when the amount of change in the motion pose meets a sending trigger condition of the virtual gift.

In some embodiments, the human-machine interaction apparatus 900 may further comprise:
a gift homing module, configured to control the virtual gift to return, in the virtual space, to an original position of the virtual gift on the close gift panel from the hand model when the amount of change in the motion pose meets a homing condition of the virtual gift.

In some embodiments, the human-machine interaction apparatus 900 may further comprise:
a sending guiding module, configured to present sending guiding information of the virtual gift in the virtual space if the amount of change in the motion pose still does not meet the sending trigger condition or the homing condition of the virtual gift when a holding duration of the hand model holding the virtual gift reaches a preset holding upper limit.

In some embodiments, the gift panel presentation module 910 may be further configured to:
present a panel template of the close gift panel in an experience mode in the virtual space if a current presentation of the close gift panel in the virtual space is a presentation within a preset number of times;
control the hand model to perform a corresponding sending operation on an experience gift in the panel template according to gift sending guiding information in the experience mode;
present exit information of the experience model in the virtual space after the successful sending of the experience gift is completed in the experience mode; and
present the close gift panel in the virtual space in response to an exit operation of the experience mode.

In some embodiments, the human-machine interaction apparatus 900 may further comprise:
a panel page turning module, configured to control the close gift panel to turn a page in response to a page turning operation of the close gift panel, and present a new virtual gift along with the page turning of the close gift panel.

In some embodiments, the page turning operation of the close gift panel comprises at least one of the following operations:
a dragging and page turning operation of the hand model for the close gift panel;
a trigger operation of the hand model for a page turning control in the close gift panel; and
a toggle operation of the hand model for a rocker assembly in a handle model.

In some embodiments, the human-machine interaction apparatus 900 may further comprise:
a vibration module, configured to control the XR device to perform vibration of different degrees according to different interaction operations performed by the hand model for any virtual object in the virtual space.

In the embodiments of the present disclosure, a corresponding close gift panel may be presented in a virtual space in response to a trigger operation of a gift entrance in the virtual space, the close gift panel is beside the user, and the user is supported to perform a related sending operation on any virtual gift in the close gift panel through a hand model. Therefore, in response to a sending operation of the hand model for any virtual gift, a sending effect of the virtual gift may be presented in the virtual space, and a corresponding gift sending effect does not need to be presented by using a trigger key of a handle after a certain virtual gift is selected by using a cursor ray, so that interactive operations of the user when the user sends a virtual gift in the virtual space are increased, diversified interaction of the virtual gift in the virtual space is implemented, interactivity and an interactive atmosphere of the virtual gift in the virtual space are enhanced, and enthusiasm of the user for live streaming in the virtual space is aroused.

It should be understood that the apparatus embodiment may correspond to the method embodiment in the present disclosure, and similar descriptions may be referred to in the method embodiment in the present disclosure. To avoid repetition, details are not described herein again.

For example, the apparatus 900 shown in FIG. 27 may perform any method embodiment provided in the present disclosure, and the foregoing and other operations and/or functions of each module in the apparatus 900 shown in FIG. 27 are respectively used to implement a corresponding process of the foregoing method embodiment. For the sake of brevity, details are not described herein again.

The foregoing method embodiments in the embodiments of the present disclosure are described above with reference to the accompanying drawings from the perspective of functional modules. It should be understood that the functional modules may be implemented in a form of hardware, or may be implemented by instructions in a form of software, or may be implemented by a combination of hardware and software modules. For example, each step of the method embodiment in the embodiments of the present disclosure may be completed by an integrated logic circuit in hardware in a processor and/or instructions in a form of software, and steps of the method disclosed in the embodiments of the present disclosure may be directly embodied as being completed by a hardware decoding processor, or may be completed by a combination of hardware and a software module in a decoding processor. For example, the software module may be located in a mature storage medium in the art such as a random access memory, a flash memory, a read-only memory, a programmable read-only memory, an electrically erasable programmable memory, or a register. The storage medium is located in a memory, and a processor reads information in the memory and completes the steps in the foregoing method embodiment in combination with the hardware of the processor.

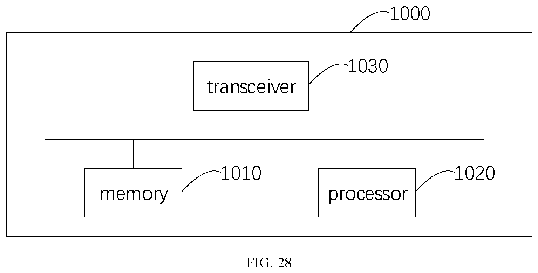

FIG. 28 is a schematic block diagram of an electronic device according to some embodiments of the present disclosure.

As shown in FIG. 28, the electronic device 1000 may comprise:
a memory 1010 and a processor 1020, where the memory 1010 is configured to store a computer program and transmit program code to the processor 1020. In other words, the processor 1020 may invoke and run the computer program from the memory 1010, to implement the method in this embodiment of the present disclosure.

For example, the processor 1020 may be configured to perform the foregoing method embodiment according to an instruction in the computer program.

In some embodiments of the present disclosure, the processor 1020 may comprise but is not limited to one or more of the following:
A general-purpose processor, a digital signal processor (Digital Signal Processor, DSP), an application specific integrated circuit (Application Specific Integrated Circuit, ASIC), a field programmable gate array (Field Programmable Gate Array, FPGA), or another programmable logic device, a discrete gate or transistor logic device, or a discrete hardware component.

In some embodiments of the present disclosure, the memory 1010 comprises but is not limited to one or more of the following:
A volatile memory and/or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), which is used as an external cache. For example, many forms of RAMs are available, such as a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synch link dynamic random access memory (synch link DRAM, SLDRAM), and a direct Rambus random access memory (Direct Rambus RAM, DR RAM).

In some embodiments of the present disclosure, the computer program may be divided into one or more modules, the one or more modules are stored in the memory 1010, and are executed by the processor 1020, to complete the method provided by the present disclosure. The one or more modules may be a series of computer program instruction segments capable of performing specific functions, and the instruction segments are used to describe an execution process of the computer program in the electronic device 1000.

As shown in FIG. 28, the electronic device may further comprise:
a transceiver 1030, where the transceiver 1030 may be connected to the processor 1020 or the memory 1010.

The processor 1020 may control the transceiver 1030 to communicate with another device. For example, the processor 1020 may send information or data to the another device, or receive information or data sent by the another device. The transceiver 1030 may comprise a transmitter and a receiver. The transceiver 1030 may further comprise an antenna, and a quantity of antennas may be one or more.

It should be understood that each component in the electronic device 1000 is connected by using a bus system. The bus system comprises, in addition to a data bus, a power bus, a control bus, and a status signal bus.

The present disclosure further provides a computer storage medium having a computer program stored thereon, where when the computer program is executed by a computer, the computer is enabled to perform the method of the method embodiment described above.

This embodiment of the present disclosure further provides a computer program product containing instructions, where when the instructions are executed by a computer, the computer is enabled to perform the method of the method embodiment described above.

When implemented in software, the present disclosure may be implemented in whole or in part in the form of a computer program product. The computer program product comprises one or more computer instructions. When the computer program instructions are loaded and executed on a computer, the processes or functions according to the embodiments of the present disclosure are all or partially generated. The computer may be a general-purpose computer, a dedicated computer, a computer network, or another programmable apparatus. The computer instructions may be stored in a computer-readable storage medium, or may be transmitted from one computer-readable storage medium to another computer-readable storage medium. For example, the computer instructions may be transmitted from a website, computer, server, or data center to another website, computer, server, or data center in a wired (for example, coaxial cable, optical fiber, or digital subscriber line (Digital Subscriber Line, DSL)) or wireless (for example, infrared, radio, or microwave) manner. The computer-readable storage medium may be any usable medium accessible by the computer, or a data storage device such as a server or a data center integrating one or more usable media. The usable medium may be a magnetic medium (for example, a floppy disk, a hard disk, or a magnetic tape), an optical medium (for example, a digital video disc (Digital Video Disc, DVD)), a semiconductor medium (for example, a solid-state drive (Solid State Disk, SSD)), or the like.

The foregoing descriptions are merely implementations of the present disclosure, but the protection scope of the present disclosure is not limited thereto. Any person skilled in the art can easily think of changes or replacements within the technical scope disclosed in the present disclosure, and all of the changes or replacements shall fall within the protection scope of the present disclosure. Therefore, the protection scope of the present disclosure shall be subject to the protection scope of the claims.

It should be noted that the computer-readable medium described above in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. Examples of the computer-readable storage medium may comprise, but are not limited to: an electrical connection having one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, the computer-readable storage medium may be any tangible medium containing or storing a program, and the program may be used by or in combination with an instruction execution system, apparatus, or device. In the present disclosure, the computer-readable signal medium may comprise a data signal propagated in a baseband or as a part of a carrier, and the data signal carries computer-readable program code. The propagated data signal may be in various forms, comprising but not limited to an electromagnetic signal, an optical signal, or any suitable combination thereof. The computer-readable signal medium may also be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, comprising but not limited to electric wires, optical cables, radio frequency (RF), etc., or any suitable combination thereof.

In some implementations, the client and the server may communicate by using any currently known or future-developed network protocol such as a hypertext transfer protocol (HTTP), and may be connected to digital data communication (for example, a communication network) in any form or medium. Examples of the communication network comprise a local area network ("LAN"), a wide area network ("WAN"), an internetwork (for example, the Internet), a peer-to-peer network (for example, an ad hoc peer-to-peer network), and any currently known or future-developed network.

The foregoing computer-readable medium may be contained in the foregoing electronic device. Alternatively, the computer-readable medium may exist independently, without being assembled into the electronic device.

The foregoing computer-readable medium carries one or more programs, and when the one or more programs are executed by the electronic device, the electronic device is enabled to perform the following steps: presenting, in response to an operation of a user entering a virtual reality space, virtual reality video information in a virtual screen in the virtual reality space, and displaying a plurality of image layers in a plurality of spatial position areas in the virtual reality space, where the spatial position areas are located at different display distances from a current viewing position of the user, and are located in front of the virtual screen and the virtual reality video information. In this way, structured display of video-related image layers between the virtual screen and the current viewing position of the user is implemented. Through hierarchical setting of distances between the image layers and the current viewing position of the user, depth information in the virtual reality space is fully used, and a three-dimensional display effect is implemented, thereby helping improve the user's viewing experience.

The electronic device can write computer program code for performing operations of the present disclosure in one or more programming languages or a combination thereof, where the programming languages comprise, but are not limited to, an object-oriented programming language, such as Java, Smalltalk, and C++, and further comprise conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or a server. In the case of the remote computer, the remote computer may be connected to a computer of a user through any type of network, comprising a local area network (LAN) or a wide area network (WAN), or may be connected to an external computer (for example, connected through the Internet by using an Internet service provider).

The flowcharts and block diagrams in the accompanying drawings illustrate possible system architectures, functions, and operations of the system, the method, and the computer program product according to various embodiments of the present disclosure. In this regard, each block in the flowchart or block diagram may represent a module, program segment, or part of code, and the module, program segment, or part of code contains one or more executable instructions for implementing specified logical functions. It should also be noted that in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The units involved in the descriptions of the embodiments of the present disclosure may be implemented by software, or may be implemented by hardware. The name of a unit does not constitute a limitation on the unit itself in some cases.

The functions described hereinabove may be performed, at least partially, by one or more hardware logic components. For example, without limitation, exemplary types of hardware logic components that may be used comprise: a field programmable gate array (FPGA), an application specific integrated circuit (ASIC), an application specific standard product (ASSP), a system on chip (SOC), a complex programmable logic device (CPLD), and the like.

In the context of the present disclosure, the machine-readable medium may be a tangible medium that may contain or store a program used by or in combination with an instruction execution system, apparatus, or device. The machine-readable medium may be a machine-readable signal medium or a machine-readable storage medium. The machine-readable medium may comprise but is not limited to electronic, magnetic, optical, electromagnetic, infrared, or semiconductor systems, apparatuses, or devices, or any suitable combination thereof. Examples of the machine-readable storage medium may comprise, but are not limited to, an electrical connection based on one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

The foregoing descriptions are merely preferred embodiments of the present disclosure and explanations of the applied technical principles. Persons skilled in the art should understand that the scope of disclosure involved in the present disclosure is not limited to the technical solutions formed by the specific combination of the foregoing technical features, and shall also cover other technical solutions formed by any combination of the foregoing technical features or their equivalent features without departing from the foregoing disclosure concept. For example, the technical solutions formed by replacing the foregoing features with technical features with similar functions disclosed in the present disclosure (but not limited thereto).

In addition, although the operations are depicted in a specific order, it should not be understood as requiring these operations to be performed in the specific order shown or in a sequential order. Under certain circumstances, multitasking and parallel processing may be advantageous. Similarly, although several specific implementation details are comprised in the foregoing discussions, these details should not be construed as limiting the scope of the present disclosure. Some features that are described in the context of separate embodiments may alternatively be implemented in combination in a single embodiment. In contrast, various features described in the context of a single embodiment may alternatively be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely exemplary forms of implementing the claims.

## Claims

1. A display processing method based on a virtual reality space, comprising:
presenting virtual reality video information in a virtual screen in a virtual reality space in response to an operation of a user entering the virtual reality space; and
separately displaying a plurality of image layers in a plurality of spatial position areas in the virtual reality space, wherein each spatial position area of the plurality of spatial position areas has a different display distance from a current viewing position of the user, and is located in front of the virtual screen.

2. The display processing method according to claim 1, wherein the separately displaying the plurality of image layers in a plurality of spatial position areas in the virtual reality space comprises:
obtaining a layer type of the plurality of image layers corresponding to the virtual reality video information;
determining the plurality of spatial position areas of the plurality of image layers in the virtual reality space according to the layer type; and
performing display processing on a layer message of an image layer corresponding to each spatial position area of the plurality of spatial position areas according to the each spatial position area of the plurality of spatial position areas.

3. The display processing method according to claim 1 or 2, wherein the determining the plurality of spatial position areas of the plurality of image layers in the virtual reality space according to the layer type comprises:
determining priority information of the plurality of image layers according to the layer type; and
determining the plurality of spatial position areas of the plurality of image layers in the virtual reality space according to the priority information.

4. The display processing method according to any one of claims 1 to 3, wherein the determining the plurality of spatial position areas of the plurality of image layers in the virtual reality space according to the priority information comprises:
determining a video display position of the virtual reality video information in the virtual reality space; and
determining, one by one, in a direction close to the current viewing position of the user, a spatial position area of each image layer of the plurality of image layers starting from the video display position according to a preset distance interval and a sequence from low to high of the priority information, to determine the plurality of spatial position areas of the plurality of image layers.

5. The display processing method according to claim 3 or 4, wherein the determining the plurality of spatial position areas of the plurality of image layers in the virtual reality space according to the priority information comprises:
determining a target image layer corresponding to a highest priority according to the priority information;
determining a spatial position area of the target image layer in the virtual reality space; and
determining, one by one, in a direction away from the current viewing position of the user, a spatial position area of each other image layer in the plurality of image layers starting from the spatial position area according to a preset distance interval and a sequence from high to low of the priority information, to determine the plurality of spatial position areas of the plurality of image layers.

6. The display processing method according to any one of claims 3 to 5, wherein the determining the plurality of spatial position areas of the plurality of image layers in the virtual reality space according to the priority information comprises:
querying a preset database according to the priority information, to obtain the plurality of spatial position areas corresponding to the plurality of image layers.

7. The display processing method according to any one of claims 1 to 6, wherein
a spatial position area corresponding to each image layer of the plurality of image layers is located on a circular arc area corresponding to the each image layer, where a center position of the circular arc area corresponding to the each image layer is located on a sight direction of the user corresponding to the current viewing position of the user.

8. The display processing method according to any one of claims 1 to 7, wherein:
vertical coordinate values of the plurality of spatial position areas are different; and
horizontal coordinate values corresponding to the plurality of spatial position areas are not completely same, and/or vertical coordinate values corresponding to the plurality of spatial position areas are not completely same.

9. The display processing method according to any one of claims 2 to 8, wherein the layer type corresponding to the plurality of image layers comprises
a plurality of types of a user operation interface layer, an information stream display layer, a gift display layer, or an expression display layer.

10. The display processing method according to any one of claims 2 to 8, wherein the performing display processing on the layer message of the image layer corresponding to each spatial position area of the plurality of spatial position areas according to the each spatial position area of the plurality of spatial position areas comprises:
determining a first image layer corresponding to a first layer message in response to obtaining the first layer message of a preset first type; and
displaying the first layer message in a spatial position area of the first image layer.

11. The display processing method according to claim 10, wherein the performing display processing on the layer message of an image layer corresponding to each spatial position area of the plurality of spatial position areas according to the each spatial position area of the plurality of spatial position areas comprises:
adding, in response to obtaining a second layer message of a preset second type, the second layer message to a layer message queue of a second image layer corresponding to the second layer message to display a corresponding layer message in a spatial position area of the second image layer according to a queue order in the layer message queue.

12. A display processing apparatus based on a virtual reality space, comprising:
a display processing module, configured to present virtual reality video information in a virtual screen in a virtual reality space in response to an operation of a user entering the virtual reality space, and separately display a plurality of image layers in a plurality of spatial position areas in the virtual reality space, wherein each spatial position area of the plurality of spatial position areas has a different display distance from a current viewing position of the user, and is located in front of the virtual screen.

13. A model display method based on a virtual reality space, comprising:
generating a target gift model corresponding to a gift display instruction in response to the gift display instruction;
determining a target display image layer corresponding to the target gift model from a plurality of image layers corresponding to a currently played virtual reality video, wherein a spatial position area corresponding to each image layer of the plurality of image layers has a different display distance from a current viewing position of a user; and
displaying the target gift model in a target spatial position area corresponding to the target display image layer.

14. The model display method according to claim 13, before the determining the target display image layer corresponding to the target gift model, further comprising:
obtaining a layer type of the plurality of image layers; and
determining a plurality of target spatial position areas of the plurality of image layers in a virtual reality space according to the layer type, wherein each target spatial position area of the plurality of target spatial position areas has a different display distance from the current viewing position of the user.

15. The model display method according to claim 14, wherein the determining a plurality of target spatial position areas of the plurality of image layers in the virtual reality space according to the layer type comprises:
determining, according to the layer type, a display distance between the each image layers and the current viewing position of the user;
extending in a sight direction of the user with the current viewing position of the user as a center and with the display distance corresponding to the current viewing position of the user as a radius, to determine a circular arc area of the each image layer; and
determining the plurality of target spatial position areas of the plurality of image layers in the virtual reality space according to the circular arc area.

16. The model display method according to any one of claims 13 to 15, wherein the generating the target gift model corresponding to the gift display instruction in response to the gift display instruction comprises:
determining gift model rendering information corresponding to the gift display instruction;
obtaining operation object information corresponding to the gift display instruction; and
generating the target gift model corresponding to the gift display instruction according to the gift model rendering information and the operation object information.

17. The model display method according to any one of claims 13 to 16, wherein the determining the target display image layer corresponding to the target gift model from the plurality of image layers corresponding to the currently played virtual reality video comprises:
identifying first priority level information of the target gift model;
determining second priority level information of the each image layer; and
determining, as the target display image layer, an image layer corresponding to second priority level information matching the first priority level information.

18. The model display method according to any one of claims 13 to 17, wherein the determining the target display image layer corresponding to the target gift model from the plurality of image layers corresponding to the currently played virtual reality video comprises:
identifying a gift type of the target gift model; and
determining, from the plurality of image layers, an image layer matching the gift type as the target display image layer.

19. The model display method according to any one of claims 13 to 18, wherein the displaying the target gift model in the target spatial position area corresponding to the target display image layer comprises:
determining a display path of the target gift model, and controlling the target gift model to be displayed in the target spatial position area according to the display path; and/or
determining a display duration of the target gift model, and controlling the target gift model to be displayed in the target spatial position area according to the display duration.

20. A model display apparatus based on a virtual reality space, comprising:
a generation module, configured to generate a target gift model corresponding to a gift display instruction in response to the gift display instruction;
a determination module, configured to determine, from a plurality of image layers corresponding to a currently played virtual reality video, a target display image layer corresponding to the target gift model, wherein a spatial position area corresponding to each image layer of the plurality of image layers has a different display distance from a current viewing position of a user; and
a display module, configured to display the target gift model in a target spatial position area corresponding to the target display image layer.

21. A human-machine interaction method, applied to an extended reality (XR) device, the human-machine interaction method comprising:
presenting, a close gift panel corresponding to a gift entrance in a virtual space in response to a trigger operation on the gift entrance in the virtual space; and
presenting, in the virtual space, a sending effect of a virtual gift in response to a sending operation of a hand model on a virtual gift in the close gift panel in the virtual space.

22. The human-machine interaction method according to claim 21, wherein the presenting the close gift panel corresponding to the gift entrance in the virtual space in response to the trigger operation on the gift entrance in the virtual space comprises:
presenting, the close gift panel corresponding to a far gift entrance in the virtual space in response to a cursor selection operation on the far gift entrance in the virtual space,
where the far gift entrance is located in a virtual screen in the virtual space.

23. The human-machine interaction method according to claim 21 or 22, further comprising:
retracting the close gift panel in the virtual space in response to a trigger operation of the hand model for a retraction control in the close gift panel.

24. The human-machine interaction method according to claim 22 or 23, further comprising:
playing a far presentation effect or a far retraction effect of the close gift panel in the virtual space.

25. The human-machine interaction method according to any one of claims 21 to 24, wherein the presenting the close gift panel corresponding to the gift entrance in the virtual space in response to the trigger operation on the gift entrance in the virtual space comprises:
presenting, the close gift panel corresponding to a close gift entrance in the virtual space in response to a hovering confirmation operation of the hand model for the close gift entrance in the virtual space, where the close gift entrance is located at a close position of the user in the virtual space, and is in a first ghost state by default.

26. The human-machine interaction method according to claim 25, further comprising:
controlling the close gift entrance to switch from the ghost state to an activated state in response to a hovering operation of the hand model for the close gift entrance.

27. The human-machine interaction method according to claim 26, after the presenting, in the virtual space, the close gift panel corresponding to the close gift entrance, further comprising:
controlling the close gift entrance to switch from the activated state to a second ghost state.

28. The human-machine interaction method according to any one of claims 25 to 27, after the presenting, in the virtual space, the close gift panel corresponding to the close gift entrance, further comprising:
retracting the close gift panel in the virtual space in response to a re-hovering confirmation operation of the hand model for the close gift entrance.

29. The human-machine interaction method according to any one of claims 25 to 28, further comprising:
playing a close presentation effect or a close retraction effect of the close gift panel in the virtual space.

30. The human-machine interaction method according to claim 28 or 29, after the retracting the close gift panel in the virtual space, further comprising:
controlling the close gift entrance to switch back to the first ghost state.

31. The human-machine interaction method according to any one of claims 21 to 30, wherein the presenting, in the virtual space, the close gift panel corresponding to the gift entrance comprises:
presenting the close gift panel corresponding to the gift entrance at a predetermined position in a virtual reality space, where a distance between the predetermined position and the user meets a predetermined distance requirement.

32. The human-machine interaction method according to any one of claims 21 to 30, wherein the presenting, in the virtual space, the sending effect of the virtual gift comprises:
determining a preset gift sending safety area in the virtual space; and
presenting the sending effect of the virtual gift in the virtual space according to the gift sending safety area.

33. The human-machine interaction method according to claim 32, wherein a live content display area, the gift sending safety area, and the close gift panel in the virtual space are located in different spatial planes and are sequentially distributed in the virtual space according to a preset distance and area size.

34. The human-machine interaction method according to any one of claims 21 to 33, wherein the sending effect of the virtual gift comprises at least one of a throwing effect set based on a spatial throwing trajectory or a throwing effect set based on the virtual gift and a spatial throwing trajectory of the virtual gift in the virtual space.

35. The human-machine interaction method according to any one of claims 21 to 33, wherein the sending operation of the hand model for the virtual gift in the close gift panel in the virtual space is determined by following steps:
determining an amount of change in a motion pose of the hand model holding the virtual gift in response to a holding operation of the hand model for the virtual gift in the close gift panel in the virtual space; and
determining the sending operation of the hand model for the virtual gift in response to the amount of change in the motion pose meeting a sending trigger condition of the virtual gift.

36. The human-machine interaction method according to claim 35, further comprising:
controlling the virtual gift to return from the hand model to an original position of the virtual gift on the close gift panel in the virtual space in response to the amount of change in the motion pose meeting a homing condition of the virtual gift.

37. The human-machine interaction method according to claim 36, further comprising:
presenting, in the virtual space, sending guidance information of the virtual gift in response to a duration in which the hand model holds the virtual gift reaches a preset upper limit of a holding duration, and the amount of change in the motion pose does not meet the sending trigger condition or the homing condition of the virtual gift.

38. The human-machine interaction method according to any one of claims 21 to 37, wherein the presenting, in the virtual space, the close gift panel corresponding to the gift entrance comprises:
presenting, in the virtual space, a panel template of the close gift panel in an experience mode in response to a current presentation of the close gift panel in the virtual space is a presentation within a preset number of times;
controlling the hand model to perform a sending operation corresponding to the sending guidance information on an experience gift in the panel template according to the sending guidance information in the experience mode;
presenting, in the virtual space, exit information of the experience model after the experience gift is successfully sent in the experience mode; and
presenting the close gift panel in the virtual space in response to an exit operation of the experience mode.

39. The human-machine interaction method according to any one of claims 21 to 38, after the presenting, in the virtual space, the close gift panel corresponding to the gift entrance, further comprising:
controlling the close gift panel to perform a page turning in response to a page turning operation of the close gift panel, and presenting a new virtual gift along with the page turning of the close gift panel.

40. The human-machine interaction method according to claim 39, wherein the page turning operation of the close gift panel comprises at least one of following:
a dragging and page turning operation of the hand model for the close gift panel;
a trigger operation of the hand model for a page turning control in the close gift panel; or
a toggle operation of the hand model for a rocker assembly in a handle model.

41. The human-machine interaction method according to any one of claims 21 to 40, further comprising:
controlling the XR device to perform vibrations of different degrees according to different interaction operations performed by the hand model for a virtual object in the virtual space.

42. A human-machine interaction apparatus, configured on an extended reality (XR) device, the human-machine interaction apparatus comprising:
a gift panel presentation module, configured to present, a close gift panel corresponding to a gift entrance in a virtual space in response to a trigger operation on the gift entrance in the virtual space; and
a gift sending module, configured to present, in the virtual space, a sending effect of a virtual gift in response to a sending operation of a hand model on a virtual gift in the close gift panel in the virtual space.

43. An electronic device, comprising:
a processor; and
a memory configured to store an executable instruction of the processor,
wherein the processor is configured to read the executable instruction from the memory, and execute the executable instruction to implement a display processing method based on a virtual reality space according to any one of claims 1 to 11, a model display method based on a virtual reality space according to any one of claims 13 to 19, or a human-machine interaction method according to any one of claims 21 to 41.

44. A non-volatile computer-readable storage medium, wherein the computer-readable storage medium stores a computer program, and the computer program is configured to perform a display processing method based on a virtual reality space according to any one of claims 1 to 11, a model display method based on a virtual reality space according to any one of claims 13 to 19, or a human-machine interaction method according to any one of claims 21 to 41.

45. A computer program, comprising:
an instruction that, when executed by a processor, causes the processor to perform a display processing method based on a virtual reality space according to any one of claims 1 to 11, a model display method based on a virtual reality space according to any one of claims 13 to 19, or a human-machine interaction method according to any one of claims 21 to 41.
